(19)

**Europäisches Patentamt**
**European Patent Office**
**Office européen des brevets**

(11) **EP 4 736 982 A2**

(12) **EUROPEAN PATENT APPLICATION**

(43) Date of publication:
06.05.2026 Bulletin 2026/19

(21) Application number: 26163728.4

(22) Date of filing: **28.06.2019**

(51) International Patent Classification (IPC):
**B01D 25/24** (2006.01)

(52) Cooperative Patent Classification (CPC):
**B01D 36/003; B01D 25/24; B01D 25/26;**
**B01D 27/04; B01D 29/07; B01D 39/083;**
**B01D 39/12; B01D 39/1623; B01D 39/18;**
**B01D 39/2017; B01D 46/527;** B01D 2201/12;
B01D 2201/602; B01D 2239/025; B01D 2239/0654;
(Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(62) Document number(s) of the earlier application(s) in
accordance with Art. 76 EPC:
**19935414.3 / 3 990 143**

(71) Applicant: **Atmus Filtration IP Inc.**
**Nashville, TN 37214 (US)**

(72) Inventors:
• **VERDEGAN, Barry Mark**
**Stoughton, 53589 (US)**
• **BATES, Billy M.**
**Cookeville, 38506 (US)**
• **WIECZOREK, Mark T.**
**Cookeville, 38506 (US)**

• **BURBRINK, Cliffton J.**
**Westport, 47283 (US)**
• **SOUTH, Kevin C.**
**Cookeville, 38506 (US)**
• **BAGCI, Ismail C**
**Cookeville, 38506 (US)**
• **HOVERSON, Gregory W.**
**Columbus, 47203 (US)**
• **ABDALLA, Wassem**
**Cookeville, 38501 (US)**

(74) Representative: **Marks & Clerk Cummins**
**1 New York Street**
**Manchester M1 4HD (GB)**

Remarks:
This application was filed on 10.03.2026 as a
divisional application to the application mentioned
under INID code 62.

(54) **FILTER ASSEMBLIES UTILIZING FULL CROSS-SECTION**

(57) A filter assembly comprises a filter housing defining an internal volume having an inner cross-section defining an inner cross-sectional distance, the filter housing having a base and a sidewall. A filter element is disposed within the internal volume. The filter element comprises a filter media pack at least a portion of which has an outer cross-section defining an outer cross-sectional distance that is substantially equal to the inner cross-sectional distance of the internal volume of the filter housing. A support structure is coupled to at least one longitudinal end of the filter media pack.

**FIG. 53**

EP 4 736 982 A2

(52) Cooperative Patent Classification (CPC): (Cont.)
B01D 2239/0672; B01D 2239/0677;
B01D 2239/0681; B01D 2239/10

## Description

Technical Field

The present disclosure relates generally to filters for use with internal combustion engine systems.

Background

Internal combustion engines generally use various fluids during operation. For example, fuel (e.g., diesel, gasoline, natural gas, etc.) is used to run the engine. Air may be mixed with the fuel to produce an air-fuel mixture, which is then used by the engine to run under stoichiometric or lean conditions. Furthermore, one or more lubricants may be provided to the engine to lubricate various parts of the engine (e.g., piston cylinder, crank shaft, bearings, gears, valves, cams, etc.). These fluids may become contaminated with particulate matter (e.g., carbon, dust, metal particles, etc.) which may damage the various parts of the engine if not removed from the fluid. To remove such particulate matter or other contaminants, the fluid is generally passed through a filter assembly (e.g., a fuel filter, a lubricant filter, an air filter, a water filter assembly, etc.) structured to remove the particulate matter from the fluid prior to delivering the fluid. Loss of pressure or leakage in a filter assembly can reduce the filtering efficiency of the filter assembly.

Summary

Embodiments described herein relate generally to filter assemblies including a filter media pack that is snugly fit within a filter housing of the filter assembly, so as to provide at least partial sealing with a sidewall of the filter housing. Embodiments described herein also relate generally to forward and reverse flow filter assemblies, axial flow filter elements, axial to radial flow filter elements, variable cross-section filter elements and coalescer filter assemblies including axial flow filter media.

In a first set of embodiments, a filter assembly comprises a filter housing defining an internal volume having an inner cross-section defining an inner cross-sectional distance, the filter housing having a base and a sidewall. A filter element is disposed within the internal volume. The filter element comprises a filter media pack, at least a portion of the first filter media pack having an outer cross-section defining an outer cross-sectional distance that is substantially equal to the inner cross-sectional distance of the internal volume of the housing. A support structure is coupled to at least one longitudinal end of the filter media pack.

In another set of embodiments, a filter assembly comprises a filter housing defining an internal volume having an inner cross-section defining an inner cross-sectional distance, the filter housing having a base and a sidewall. A filter element is disposed within the internal volume. The filter element comprises an axial flow filter media pack. A channel is defined through the filter media pack along a longitudinal axis of the filter assembly. The filter media pack is configured to allow a fluid to flow therethrough along the longitudinal axis in a first direction and be filtered, the filtered fluid flowing through the channel in a second direction opposite the first direction towards the outlet. At least a portion of the filter media pack has an outer cross-section defining an outer cross-sectional distance that is substantially equal to the inner cross-sectional distance of the internal volume of the housing. A support structure is coupled to at least one end of the filter media pack.

In still another set of embodiments, a filter element is provided that is configured to be disposed within a filter housing having an inner cross-section defining a maximum inner cross-sectional distance. A filter media pack at least a portion of which has an outer cross-section defining a maximum outer cross-sectional distance that is substantially equal to the maximum inner cross-sectional distance of the internal volume of the filter housing. A support structure is coupled to at least one longitudinal end of the filter media pack.

In yet another set of embodiments, a filter element is provided that is configured to be disposed within a filter housing having an inner cross-section defining an inner cross-sectional distance. An axial flow filter media pack is provided. A channel is defined through the axial flow filter media pack along a longitudinal axis of the filter element. The axial flow filter media pack is configured to allow a fluid to flow therethrough along the longitudinal axis in a first direction and be filtered, the filtered fluid flowing through the channel in a second direction opposite the first direction towards the outlet. The axial flow filter media pack has an outer cross-section defining an outer cross-sectional distance that is substantially equal to the inner cross-sectional distance of the internal volume of the housing. A support structure is coupled to at least one end of the axial flow filter media pack.

It should be appreciated that all combinations of the foregoing concepts and additional concepts discussed in greater detail below (provided such concepts are not mutually inconsistent) are contemplated as being part of the subject matter disclosed herein. In particular, all combinations of claimed subject matter appearing at the end of this disclosure are contemplated as being part of the subject matter disclosed herein.

Brief Description of Drawings

The foregoing and other features of the present disclosure will become more fully apparent from the following description and appended claims, taken in conjunction with the accompanying drawings. Understanding that these drawings depict only several implementations in accordance with the disclosure and are therefore, not to be considered limiting of its scope, the disclosure will be described with additional specificity and detail through use of the accompanying drawings.

FIG. 1 is a schematic illustration of a filter assembly, according to an embodiment.

FIG. 2 is a perspective view of a pleated filter media defining a plurality of tetrahedron channels, according to an embodiment.

FIG. 3 is an enlarged perspective view of a pleated filter media defining a plurality of tetrahedron channels.

FIG. 4 shows the pleated filter media of FIG. 2 from the inlet end.

FIG. 5 shows the pleated filter media of FIG. 2 from the outlet end.

FIG. 6 is an exploded perspective view showing a portion of a pleated filter media defining tetrahedron channels, according to an embodiment

FIG. 7 is an enlarged perspective view showing a portion of a pleated filter media defining tetrahedron channels, according to an embodiment.

FIG. 8 is like FIG. 6 and is a view from the opposite end.

FIG. 9 is a perspective view showing one implementation of a pleated filter, according to an embodiment.

FIG. 10 is a perspective view showing another implementation of a pleated filter media, according to an embodiment.

FIG. 11 is an end view showing another implementation of a pleated filter media, according to an embodiment.

FIG. 12 is a perspective view further showing the implementation of FIG. 11.

FIG. 13 is a sectional view taken along line 12-12 of FIG. 12.

FIG. 14 is like FIGS. 6 and 7 and shows another embodiment.

FIG. 15 is like FIG. 8 and is a view from the opposite end of FIG. 14.

FIG. 16 is like FIG. 6 and further shows the construction of FIG.14.

FIG. 17A is a schematic illustration of a filter assembly including a filter element, according to an embodiment.

diment.

FIG. 17B is a perspective view of a filter media pack that may be used in the filter assembly of FIG. 17A, according to an embodiment.

FIG. 17C is a perspective view of a filter media pack that may be used in the filter assembly of FIG. 17A, according to another embodiment.

FIG. 18 is side cross-section view of the filter element of FIG. 17A, according to an embodiment.

FIG. 19 is a schematic illustration of a filter assembly including a filter element, according to another embodiment.

FIG. 20 is side cross-section view of the filter element of FIG. 19, according to an embodiment.

FIG. 21 is a top perspective view of a first filter media layer that may be used in a filter media pack.

FIG. 22 is top perspective view of a coiled filter media pack, a portion of which is unrolled to show various layers included therein, according to an embodiment.

FIG. 23 is a top perspective view of a coiled filter media pack, a portion of which is unrolled to show various layers included therein, according to another embodiment.

FIG. 24-28 are schematic illustrations showing various operations which may be used to form a filter pocket from a filter media layer, according to various embodiments.

FIG. 29 is a schematic illustration of a filter element including a folded filter media, according to an embodiment.

FIG. 30 is a schematic illustration of a filter element including a folded filter media, according to another embodiment.

FIG. 31 is a perspective view of a filter element, according to an embodiment.

FIG. 32 is a top perspective view of a coiled filter media pack, a portion of which is unrolled to show various layers included therein, according to another embodiment.

FIG. 33 shows the filter media pack of FIG. 32 after being coiled.

FIG. 34 is a side cross-section view of a portion of a filter media pack, according to still another embodiment.

FIG. 35 is a top cross-section view of a filter media pack including a plurality of filter media layers of different lengths coupled to each other and sized so as to form an oblong shaped filter media, according to an embodiment.

FIG. 36 is a top cross-section of a filter media pack including a filter media layer folded multiple times to form an oblong shaped filter media pack, according to another embodiment.

FIG. 37 is a schematic illustration of a filter element including a primary filter media pack having a first width and a downstream filter media pack having a second width less than the first width, according to an embodiment.

FIG. 38 is a schematic illustration of a filter element including a primary filter media pack having a first width, an upstream filter media pack having a second width larger than the first width, and a downstream filter media pack having a third width smaller than the first width.

FIG. 39 is a schematic illustration of a reverse flow filter element, according to another embodiment.

FIG. 40 is a schematic illustration of a rotating filter element configured to filter fuel or oil, according to an embodiment.

FIG. 41 is a schematic illustration of a coalescer filter element including an axial flow filter media, according to another embodiment.

FIG. 42 is a side cross-section of a filter media pack included in the coalescer filter assembly of FIG. 41 taken along the line X-X shown in FIG. 41, according to an embodiment.

FIG. 43 is a top cross-section view of the filter media pack included in the coalescer assembly of FIG. 41.

FIG. 44 is a side cross-section view of a portion of the filter media pack included in the coalescer filter assembly of FIG. 41 taken along the line Y-Y in FIG. 43.

FIGS. 45-47 are side cross-section views of filter assemblies, according to various embodiments.

FIG. 48 is a front perspective view of a filter media pack, according to an embodiment.

FIG. 49 is a front view of a filter media pack, according to another embodiment.

FIG. 50 is a side perspective view of a filter housing for housing the filter element of FIG. 51, according to an embodiment.

FIG. 51 is a perspective view of a rolled filter media pack including a backing sheet and a filter media layer, according to an embodiment.

FIG. 52 is a perspective view of the backing sheet of FIG. 51 in a flat configuration.

FIG. 53 is a side perspective view of the filter media pack with the backing sheet and the filter media layer partially unrolled.

FIG. 54 is a side cross-section view of the filter media pack of FIG. 53 taken along the line A-A in FIG. 53.

Reference is made to the accompanying drawings throughout the following detailed description. In the drawings, similar symbols typically identify similar components, unless context dictates otherwise. The illustrative implementations described in the detailed description, drawings, and claims are not meant to be limiting. Other implementations may be utilized, and other changes may be made, without departing from the spirit or scope of the subject matter presented here. It will be readily understood that the aspects of the present disclosure, as generally described herein, and illustrated in the figures, can be arranged, substituted, combined, and designed in a wide variety of different configurations, all of which are explicitly contemplated and made part of this disclosure.

Detailed Description

Embodiments described herein relate generally to filter assemblies including a filter media pack that is snugly fit within a filter housing of the filter assembly, so as to provide at least partial sealing with a sidewall of the filter housing. Embodiments described herein also relate generally to forward and reverse flow filter assemblies, axial flow filter elements, axial to radial flow filter elements, variable cross-section filter elements and coalescer filter assemblies including axial flow filter media packs.

Embodiments of filter assemblies and filter media described herein may provide one or more benefits including, for example: (1) preventing fluid leakage around a flow through filter media pack by providing a filter media pack that occupies substantially all of a cross-sectional area within a filter housing, for example, is smaller than a cross-sectional area of the filter housing or an inner cross-sectional dimension (e.g., cross-sectional width of the filter housing in which the filter media pack is disposed by 1% to 10%, inclusive, therefore providing better space utilization for contaminant removal, enhancing filter media retention, increasing capacity, and reducing face velocity and pressure drop; (2) allowing implementation in forward flow or reverse flow configurations; ( (3) increasing filter media packing density and increasing service interval by providing a fully synthetic nanofiber media paired with influent and effluent mesh layers that is coiled; (5) preventing telescoping in coiled filter media packs via the effluent mesh layer; (6) providing filter media including filter pockets for enhanced filtration efficiency and facilitating packaging; (7) preventing ballooning of coiled filter media packs via point bonds, tabs or ribs; (8) allowing series filtration using axial flow filter medias in a forward flow or reverse flow configuration; and (9) providing droplet separation from a fluid (e.g., gas or liquids) via an axial flow filter media packs.

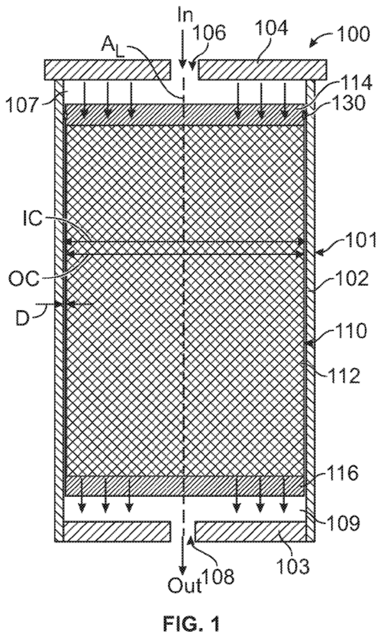

FIG. 1 is a schematic illustration of a filter assembly 100 according to an embodiment. The filter assembly 100 may be used to filter a gas (e.g., air) or another fluid provided to an engine. The filter assembly 100 comprises a filter housing 101 and a filter element 110. In some embodiments, the filter element 110 may be a disposable in-line filter including the filter housing 101. In other embodiments, the filter element 110 may include cartridge type filter element that can be installed in the filter housing 101.

The filter housing 101 defines an internal volume having an inner cross-sectional width IC (e.g., diameter, width, length, etc.), within which the filter element 110 is positioned. The filter housing 101 (e.g., a shell housing or container) includes a base 103 and a sidewall 102 projecting perpendicular to base 103 from an outer edge of the base 103. The base 103 and the sidewall 102 may be monolithically formed. The filter housing 101 may be formed from a strong and rigid material, for example, plastics (e.g., polypropylene, high density polyethylene, polyvinyl chloride, nylon, etc.), metals (e.g., aluminum, stainless steel, etc.), reinforced rubber, silicone, or any other suitable material. In particular embodiments, the filter housing 101 may comprise a cylindrical housing having generally a circular cross-section. In other embodiments, the filter housing 101 may have any other suitable cross-sectional shape, for example, circular, oval, racetrack, rectangular, square, polygonal, lobed, asymmetric, or any other suitable shape. The cross-sectional shape and/or dimensions of the filter element (in such embodiments and in other embodiments described herein) may also vary along the axial length thereof, e.g., the cross-section of the filter element 110 at one end thereof may have a different shape and/or dimensions than at the other end thereof. The filter element 110 may have a cross-sectional shape which corresponds to the cross-sectional shape of the filter housing 101.

A cap 104 or cover, is coupled to an end of the filter housing 101 distal from the base 103. The cap 104 may be removably coupled to the sidewall 102, for example, via threads, a snap-fit mechanism, a friction-fit, clamps, screws, nuts or any other suitable coupling mechanism. In some embodiments, an inlet 106 may be defined in the cap 104 to allow unfiltered fluid to enter the internal volume of the filter housing 101. In other embodiments, the inlet 106 may be defined in the sidewall 102 proximate to the cap 104. Furthermore, an outlet 108 may be defined in the base 103 for allowing filtered fluid to exit the filter housing 101. In other embodiments, the outlet 108 may be defined in the sidewall 102 proximate to the base 103. The cap 104 is removably coupled to the filter housing 101 so as to allow insertion and/or removal of the filter element 110 from the internal volume of the filter housing 101. In other embodiments, the cap 104 and/or the base 103 are permanently secured to the remainder of the filter housing 110, such that the filter element 110 is not removable from the filter housing 101 without a physical destruction of the filter housing 101. The cap 104 may be formed from any suitable material, for example, metal, plastics, polymers, elastomers, rubber, reinforced rubber, etc. In some embodiments, filter element 100 may be configured to be coupled to a filter head (e.g., spun-on the filter head). In such embodiments, the cap 104 may be excluded.

The filter element 110 is positioned along a longitudinal axis $A_L$ of the filter assembly 100 within the internal volume. The filter element 110 comprises a filter media pack 112 formed from a filter media, a first support structure 114 coupled to a first longitudinal end of the filter media pack 112 distal from the base 103, and a second support structure 116 coupled to a second longitudinal end of the filter media 112 opposite the first longitudinal end. While shown as including two support structures 114, 116, in other embodiments, the filter element 110 may have a single support structure coupled to a longitudinal end of the filter media pack 112 at which the fluid exits the filter media pack 112 after passing therethrough, for example, the longitudinal end proximate to the base 103.

The filter media used to form the filter media pack 112 comprises a porous material having a predetermined pore size and configured to filter particulate matter from a fluid flowing therethrough so as to produce filtered fluid. In some embodiments, the filter media pack 112 may include an axial flow filter media structured to allow fluid to flow therethrough along a longitudinal axis thereof from a first end proximate to the cap 104 to a second end thereof opposite the first end. In such embodiments, an inlet chamber 107 is formed between the first support structure 114 and the cap 104. Contaminated fluid enters the inlet chamber 107 through the inlet 106 and enters the first end of the filter media pack 112 through the first support structure 114. An outlet chamber 109 is also formed between the second support structure 116 and the base 103. The filtered fluid is received in the outlet chamber 109 after passing through the filter element 110 and is allowed to exit the filter housing 101 through the outlet 108 provided in the outlet chamber 109 (e.g., defined in the base 103).

In various embodiments, the first support structure 114 may include a grid or mesh structured to facilitate spreading of the fluid flow over the surface of the first end of the filter media pack 112. Furthermore, the second support structure may also include a grid or mesh to facilitate outward fluid flow of the filtered fluid expelled from the filter media pack 112.

In some embodiment, the first support structure 114 may have an outer cross-sectional distance (e.g., diameter, width, length, etc.) corresponding to the inner cross-sectional distance IC of the filter housing 101 such that an outer radial surface of the first support structure 114 contacts an inner surface of the sidewall 102 and forms a fluid-tight seal therewith so as to prevent contaminated fluid from flowing around the filter media pack 112. In such embodiments, the first support structure 114 may be formed from a compliant material, for example, rubber or polymers. In other embodiments, a sealing member 130 is disposed between the first support structure 114 and the sidewall 102 so as to prevent contaminated fluid from flowing around the filter media pack 112. The sealing member 130 may include an O-ring, a gasket or any other suitable sealing member used as a radial, axial or wiper seal.

At least a portion of the filter media pack 112 has an outer cross-section defining an outer cross-sectional distal OC (e.g., diameter or width) which is substantially equal to the inner cross-sectional distance IC (e.g., diameter or width) of the internal volume of the filter housing 101. For example, the filter media pack 112 may be a cylindrical or coiled filter media having an outer diameter which is equal to or greater than 98% of an inner diameter of the filter housing 101. In some embodiments, a distance D between inner surface of the sidewall 102 and the radial outer surface of the filter media pack 112 may be in a range of 0.1 mm to 5 mm. In embodiments in which the filter media pack 112 has various unequal cross-sections in length or diameter, each cross-section of the filter media pack 112 may be substantially equal to a corresponding cross-section of the filter housing 101.

The outer cross-sectional distance OC of the filter media pack 112 being substantially equal to the inner cross-sectional distance IC of the filter housing 101 causes at least a corresponding portion of the radial outer surface of the filter media pack 112 to be close enough to the inner surface of the sidewalls 102 to provide at least partial sealing, and in some embodiments, also provide structural support. Furthermore, this allows more efficient use of the internal volume of the housing, provides increased filter media area for increased capacity, reduced face velocity and pressure drop, therefore increasing an overall filtering efficiency of the filter assembly 100. It should be appreciated that while FIG. 1 shows the filter media pack 112 as having a constant outer cross-section, in other embodiments, the filter media pack 112 may have a variable cross-section (e.g., a tapered cross-section).

In some embodiments, the filter media pack 112 may be caged. For example, the filter element 110 may also comprise a porous rigid structure (e.g., a wire mesh) positioned around the filter media pack 112, and structured to prevent damage to the filter media pack 112 during insertion and/or removal of the filter element 110 from the internal volume.

The filter media pack 112 may have any suitable shape. In some embodiments, the filter media pack 112 may have a circular cross-section. In other embodiments, the filter media pack 112 may have a square, rectangular, elliptical, racetrack (with two curved portions joined by two substantially straight portions), oblong, polygonal, lobed, or asymmetrical cross-sectional shape, which may correspond to the inner cross-sectional shape of the housing 101. In some embodiments, the filter media pack 112 may include a coiled filter media that includes one or more filter media layers rolled into a coil (e.g., a helical coil). In other embodiments, the filter media pack 112 may include a formed filter media or a stacked filter media including a plurality of filter media layers stacked over each other to form the filter media pack 112.

The filter media pack 112 may include any suitable filter media. In some embodiments, the filter media pack 112 may include a tetrahedral media pack, for example, a pleated or folded filter media including tetrahedral pleats. In other embodiments, the filter media pack 112 may include a fluted media pack, a straw media pack, an origami media pack or any other suitable filter media pack.

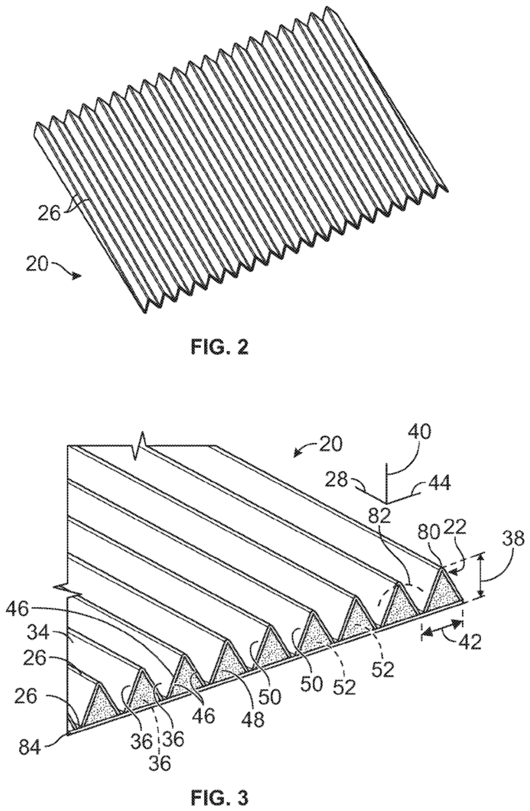

For example, in particular embodiments, the filter media pack 112 may comprise tetrahedral filter media defined by a plurality of tetrahedron channels as described in U.S. Patent No. 8,397,920, which is incorporated herein by reference in its entirety. Expanding further, FIGS. 2-5 show a filter media 20 which can be used to form the filter media pack 112 of the filter element 110. The filter media 20 has an upstream inlet 22 receiving incoming dirty fluid as shown at arrows 23, and having a downstream outlet 24 discharging clean filtered fluid as shown at arrows 25. The filter media 20 is pleated along a plurality of bend lines 26. The bend lines extend axially along an axial direction 28, FIGS. 2-5, and include a first set of bend lines 30 extending from the upstream inlet 22 towards the downstream outlet 24, and a second set of bend lines 32 extending from the downstream outlet 24 axially towards the upstream inlet 22. The filter media 20 has a plurality of filter media wall segments 34 extending in serpentine manner between the bend lines. The wall segments extend axially and define axial flow channels 36 therebetween. The channels have a height 38 along a transverse direction 40, which transverse direction 40 is perpendicular to axial direction 28, FIG. 3. The channels have a lateral width 42 along a lateral direction 44, which lateral direction 44 is perpendicular to axial direction 28 and perpendicular to transverse direction 40. The distance between at least some of the noted bend lines taper in the noted transverse direction as the bend lines extend axially in the noted axial direction, to be described.

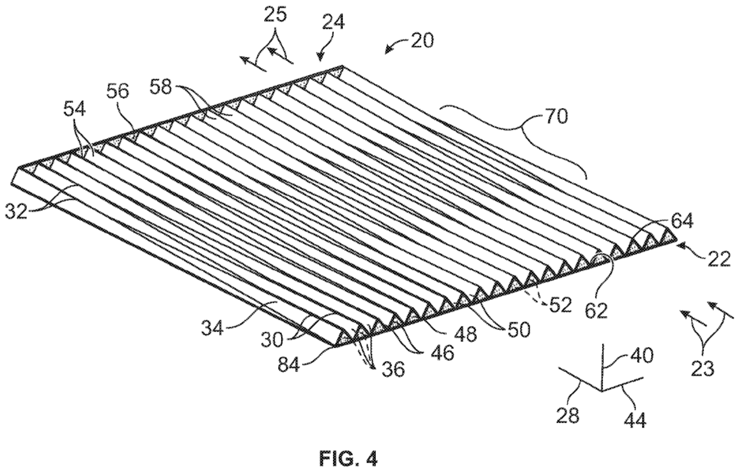

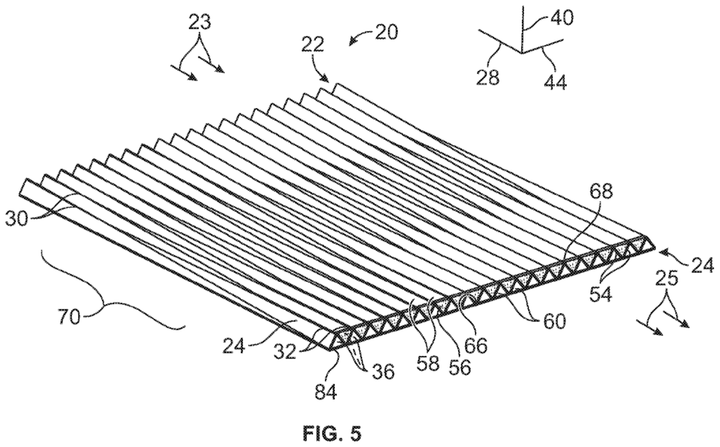

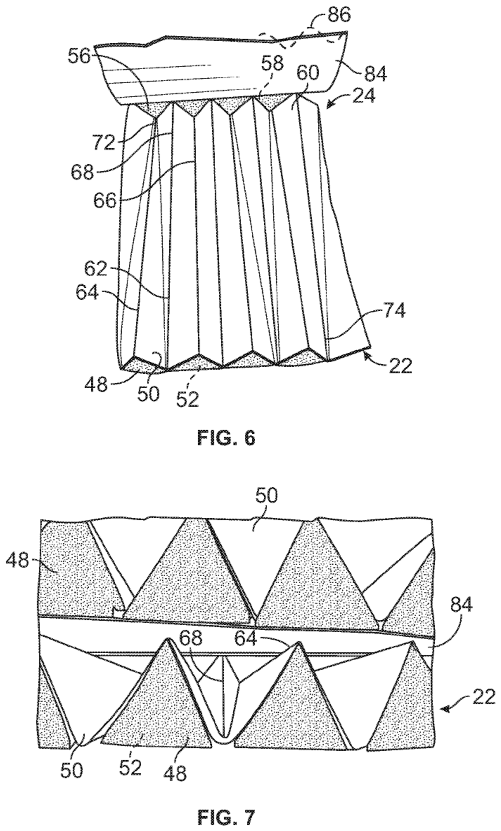

The wall segments include a first set of wall segments 46, FIGS. 3, 4, alternately sealed to each other at the upstream inlet 22, e.g. by adhesive 48 or the like, to define a first set of channels 50 having open upstream ends, and a second set of channels 52 interdigitated with the first set of channels and having closed upstream ends. The wall segments include a second set of wall segments 54, FIGS. 4, 5, alternately sealed to each other at the downstream outlet 24, e.g., by adhesive 56 or the like, to define a third set of channels 58 having closed downstream ends, and a fourth set of channels 60, FIG. 5, having open downstream ends. The first set of bend lines 30 includes a first subset of bend lines 62 defining the first set of channels 50, and a second subset of bend lines 64 defining the second set of channels 52. The second subset of bend lines 64 taper in transverse direction 40 as they extend from the upstream inlet 22 axially towards the downstream outlet 24, FIGS. 6-8. The second set of bend lines 32 includes a third subset of bend lines 66 defining the third set of channels 58, and a fourth subset of bend lines 68 defining the fourth set of channels 60. The fourth subset of bend lines 68 taper in the transverse direction 40 as they extend from the downstream outlet 24 axially towards the upstream inlet 22, FIGS. 6-8. The second set of channels 52 have a decreasing transverse channel height 38 along transverse direction 40 as the second set of channels 52 extend axially along axial direction 28 towards the downstream outlet 24. The tapering of the second subset of bend lines 64 in the transverse direction 40 provides the decreasing transverse channel height 38 of the second set of channels 52. The fourth set of channels 60 have a decreasing transverse channel height along transverse direction 40 as the fourth set of channels 60 extend axially along axial direction 28 towards the upstream inlet 22. The tapering of the fourth subset of bend lines 68 in the transverse direction 40 provides the decreasing transverse channel height 38 of the fourth set of channels 60.

Incoming dirty fluid 23 to be filtered flows along axial direction 28 into open channels 50 at the upstream inlet 22 and passes laterally and/or transversely through the filter media wall segments of the pleated filter media 20 and then flows axially along axial direction 28 as clean filtered fluid 25 through open channels 60 at the downstream outlet 24. Second subset of bend lines 64 provides lateral cross-flow thereacross along lateral direction 44 between respective channels downstream of the upstream inlet 22. Fourth subset of bend lines 68 provides lateral cross-flow thereacross along lateral direction 44 between respective channels upstream of the downstream outlet 24. Second and fourth subsets of bend lines 64 and 68 have axially overlapping sections 70, and the noted lateral cross-flow is provided at least at axially overlapping sections 70.

The second subset of bend lines 64 taper to respective termination points 72, FIGS. 6-8, providing at such termination points the minimum transverse channel height 38 of the second set of channels 52. The fourth subset of bend lines 68 taper to respective termination points 74 providing at such termination points the minimum transverse channel height 38 of the fourth set of channels 60. Termination points 72 of second subset of bend lines 64 are axially downstream of termination points 74 of fourth subset of bend lines 68. This provides the noted axially overlapping sections 70. Termination points 72 of second subset of bend lines 64 are at the downstream outlet 24 in one embodiment, and in other embodiments are axially upstream of the downstream outlet 24. Termination points 74 of fourth subset of bend lines 68 are at the upstream inlet 22 in one embodiment, and in other embodiments are axially downstream of the upstream inlet 22.

The first set of wall segments 46 are alternately sealed to each other at adhesive 48 at the upstream inlet 22 define a first set of tetrahedron channels 50 having open upstream ends, and a second set of tetrahedron channels 52 interdigitated with the first set of tetrahedron channels 50 and having closed upstream ends. The second set of wall segments 54 alternately sealed to each other at adhesive 56 at the downstream outlet 24 define a third set of tetrahedron channels 58 having closed downstream ends, and a fourth set of tetrahedron channels 60 interdigitated with the third set of tetrahedron channels 58 and having open downstream ends. The first set of bend lines 30 includes the first subset of bend lines 62 defining the first set of tetrahedron channels 50, and the second subset of bend lines 64 defining the second set of tetrahedron channels 52. The second subset of bend lines 64 taper in the transverse direction 40 as they extend from the upstream inlet 22 axially towards the downstream outlet 24. The second set of bend lines 32 includes the third subset of bend lines 66 defining the third set of tetrahedron channels 58, and the fourth subset of bend lines 68 defining the fourth set of tetrahedron channels 60. The fourth subset of bend lines 68 taper in the transverse direction 40 as they extend from the downstream outlet 24 axially towards the upstream inlet 22.

First and second sets of tetrahedron channels 50 and 52, FIGS. 4-8, face oppositely to third and fourth sets of tetrahedron channels 58 and 60. Each of the tetrahedron channels 50, 52, 58, 60 is elongated in the axial direction 28. Each of the tetrahedron channels has a cross-sectional area along a cross-sectional plane defined by the transverse and lateral directions 40 and 44. The cross-sectional areas of the first and second sets of tetrahedron channels 50 and 52 decrease as the first and second sets of tetrahedron channels 50 and 52 extend along axial direction 28 from the upstream inlet toward the downstream outlet 24. The cross-sectional areas of third and fourth sets of tetrahedron channels 58 and 60 decrease as the third and fourth sets of tetrahedron channels 58 and 60 extend along axial direction 28 from the downstream outlet 24 toward the upstream inlet. In one embodiment, bend lines 26 are bent at a sharp pointed angle, as shown at 80, FIG. 3. In other embodiments, the bend lines are rounded along a given radius, as shown in dashed line at 82, FIG. 3.

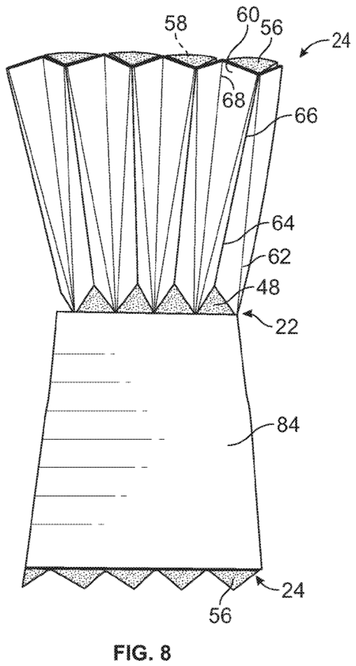

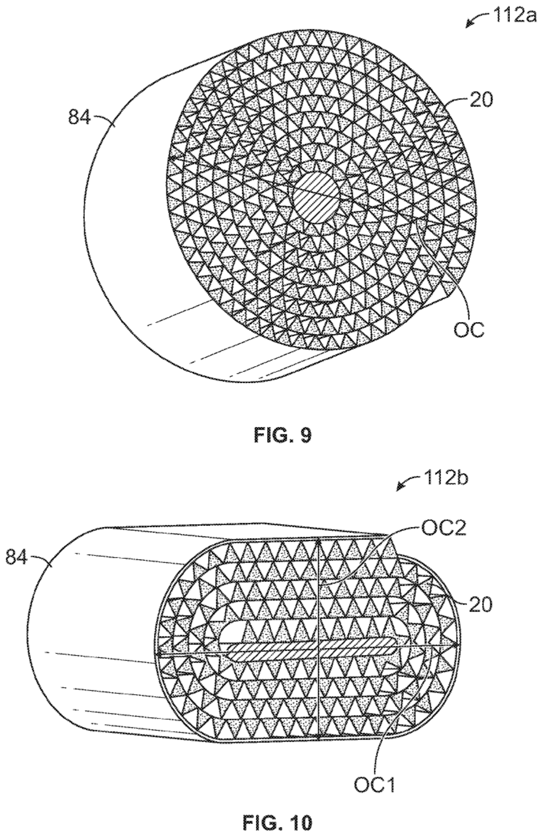

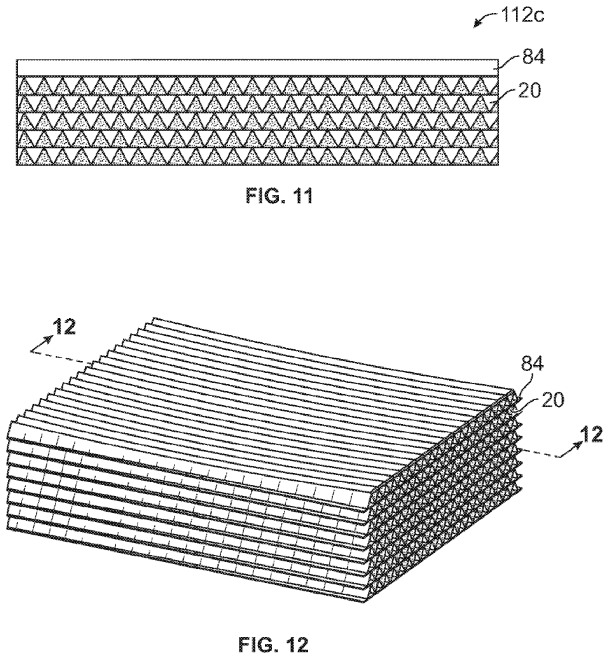

The filter media 20 is further provided with a substantially flat sheet 84 extending laterally across the bend lines. In one embodiment, the sheet is formed of filter media material, which may be the same filter media material as the pleated filter element including wall segments 34. Sheet 84 extends axially along the full axial length along axial direction 28 between the upstream inlet and the downstream outlet 24, and extends laterally along the full lateral width along lateral direction 44 across and sealing the channels to prevent bypass of dirty upstream air to clean downstream air without passing through and being filtered by a wall segment 34. In one embodiment, sheet 84 is rectiplanar along a plane defined by axial direction 28 and lateral direction 44. In another embodiment, sheet 84 is slightly corrugated, as shown in dashed line at 86, FIG. 6. In one implementation, sheet 84 is rolled with the filter media 20 into a closed loop to form a filter media pack, and in various embodiments the closed loop has a shape selected from the group of circular, FIG. 8 (filter media pack 112a), racetrack, FIG. 9 (filter media pack 112b), oval, oblong, and other closed-loop shapes. In other embodiments, a plurality of pleated filter media layers 20 and sheets are stacked upon each other in a stacked panel arrangement, FIGS. 10-13 (filter media pack 112c) to form a rectangular filter media pack. Spacer strips or embossments such as 88 may be used as needed for spacing and support between stacked elements.

As shown in FIG. 8, the coiled filter media 20 having the circular shape has an outer cross-sectional distance OC which is substantially equal to the inner cross-sectional distance IC of the housing 101. In embodiments in which the filter media 20 has two or more different sized cross-sections, for example, each of the cross-sections are substantially equal to corresponding inner cross-sections of the housing 101. For example, the racetrack filter media 20 of FIG. 10 has a first outer cross-section distance OC1 along a major axis and a second outer cross-section distance OC2 along a minor axis thereof, each of which may be substantially equal to corresponding inner cross-sectional distances of the housing 101.

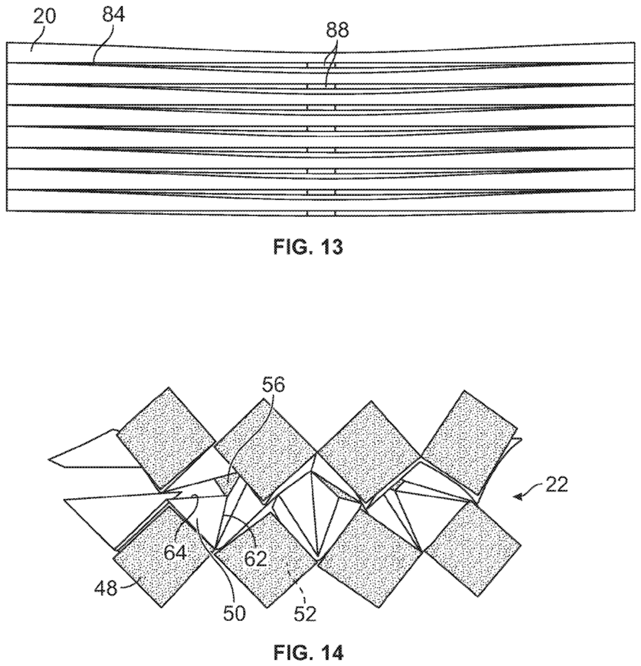

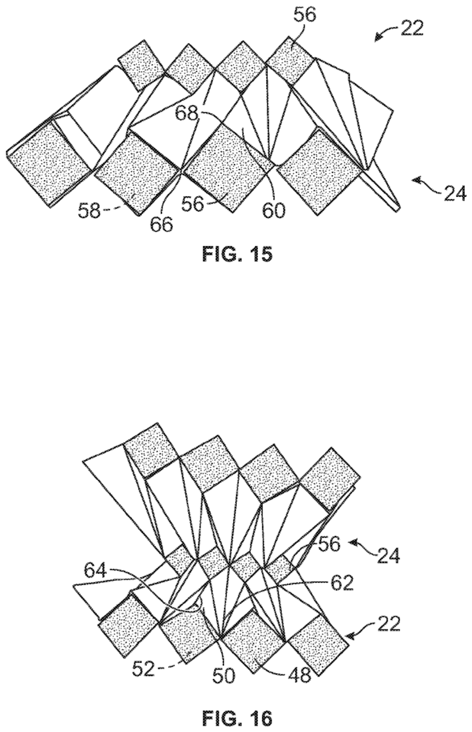

FIGS. 14-16 show a further embodiment eliminating sheet 84 and are like FIGS. 6-8 and use like reference numerals from above where appropriate to facilitate understanding. The filter element of FIGS. 14-16 has an upstream inlet 22 receiving incoming dirty fluid, and a downstream outlet 24 discharging clean filtered fluid. The wall segments are alternately sealed to each other at upstream inlet 22 as above, e.g. by adhesive or a section of filter media at 48, to define the noted first set of channels 50 having open upstream ends, and the noted second set of channels 52 interdigitated with the first set of channels and having closed upstream ends. The wall segments are alternately sealed to each other at the downstream outlet 24, e.g. by adhesive or a section of filter media at 56, to define the noted third set of channels 58 having closed downstream ends, and the noted fourth set of channels 60 having open downstream ends. The bend lines include the noted first subset of bend lines 62 defining the first set of channels 50, and the noted second subset of bend lines 64 defining the noted second set of channels 52, and the noted third subset of bend lines 66 defining the third set of channels 58, and the noted fourth subset of bend lines 68 defining the noted fourth set of channels 60.

The elongated tetrahedron channels allow for cross-flow between adjacent channels. In air filter implementations, this cross-flow allows for more even dust loading on the upstream side of the media. In one embodiment, the elongated tetrahedron channels are shaped to purposely allow for more upstream void volume than downstream void volume, to increase filter capacity. Various fluids may be filtered, including air, air/fuel mixture or other gases, and including liquids such as fuel, lubricants or water.

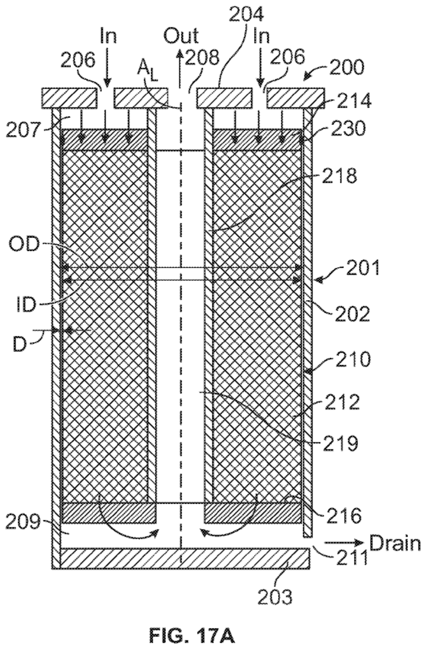

FIG. 17A is a schematic illustration of a filter assembly 200, according to another embodiment. The filter assembly 200 may be used to filter a gas (e.g., air) or another fluid provided to an engine. The filter assembly 200 comprises a filter housing 201 and a filter element 210. In some embodiments, the filter element 210 may be a disposable in-line filter including the filter housing 201. In other embodiments, the filter element 210 may include cartridge type filter element that can be installed in the filter housing 201.

The filter housing 201 (e.g., a shell housing or container) defines an internal volume having an inner cross-section defining an inner cross-section distance IC, within which the filter element 210 is positioned. The filter housing 201 includes a base 203 and a sidewall 202 projecting perpendicular to base 203 from an outer edge of the base 203. The filter housing 201 may be substantially similar to the filter housing 101.

A cap 204 or cover is coupled to an end of the filter housing 201 distal from the base 203. The cap 204 may be removably coupled to the sidewall 202, for example, via threads, a snap-fit mechanism, a friction-fit, clamps, screws, nuts or any other suitable coupling mechanism. In some embodiments, one or more inlets 206 may be defined in the cap 204 to allow unfiltered fluid to enter the internal volume of the filter housing 201. In other embodiments, the inlet 206 may be defined in the sidewall 202 proximate to the cap 204. Furthermore, an outlet 208 may also be defined in the cap 204. The cap 204 is removably coupled to the filter housing 201 so as to allow insertion and/or removal of the filter element 210 from the internal volume of the filter housing 201. In other embodiments, the cap 204 may be permanently secured to the filter housing 201, such that the filter element 210 is not removable from the filter housing 201 without a physical destruction of the filter housing 201. The cap 204 may be formed from any suitable material, for example, metal, plastics, polymers, elastomers, rubber, reinforced rubber, etc. In some embodiments, the filter element 200 may be configured to be coupled to a filter head (e.g.,

spun-on the filter head). In such embodiments, the cap 204 may be excluded.

The filter element 210 is positioned along a longitudinal axis $A_L$ of the filter assembly 200 within the internal volume. The filter element 210 comprises an axial flow filter media pack 212 having a channel 219 defined therethrough along the longitudinal axis $A_L$. An end of the channel 219 opposite the base 203 is coupled to the outlet 208. In some embodiments, a center tube 218 may be disposed in the channel 219. The center tube 218 may include a solid center tube (i.e., not including any perforations or openings). An end of the center tube 218 is coupled to the outlet 208.

A first support structure 214 is coupled to a first longitudinal end of the filter media 212 distal from the base 203, and a second support structure 216 is coupled to a second longitudinal end of the filter media opposite the first longitudinal end. The support structures 214, 216 may be substantially similar to the support structures 114, 116. In some embodiments, the first and second support structures 214, 216 may include a grid or mesh. A sealing member 230 (e.g., an O-ring or a gasket) may be disposed between the first support structure 214 and the sidewall 202 so as to prevent contaminated fluid from flowing around the filter media pack 212, as previously described with respect to the sealing member 130. While shown as including two support structures 214, 216, in other embodiments, the filter element 210 may have a single support structure coupled to a longitudinal end of the filter media pack 212 at which the fluid exits the filter media pack 212 after passing therethrough, for example, the longitudinal end proximate to the base 203.

As described before, the cap 204 is coupled to an end of the housing 201 opposite the base 203 such that an inlet chamber 207 is defined between the first support structure 214 and the cap 204. The base 203 is located at a lower elevation relative to the cap 204. The cap 204 may define the outlet 208 and the one or more inlets 206 to allow fluid to enter the inlet chamber 207. The outlet 208 is fluidly sealed from the inlet chamber 207, for example, by the center tube 218.

The axial flow filter media pack 212 is configured to allow a fluid to flow therethrough along the longitudinal axis $A_L$ in a first direction (e.g., from the cap 204 towards the base 203) and be filtered. A flow reversal chamber 209 is defined between the second support structure 216 and the base 203. The filtered fluid changes direction in the flow reversal chamber 209 and flows through the channel 219 (e.g., within the center tube 218) towards the outlet 208 and is expelled from the housing 201 via the outlet 208. Thus, the filter assembly 200 is a reverse flow filter assembly.

As the flow reversal chamber 209 is located at a lower elevation relative to the inlet chamber 207, a liquid (e.g., water, oil droplets, etc.) may collect in the flow reversal chamber 209. A drain 211 may be provided in the flow reversal chamber 209 (e.g., defined in the base 203 or the sidewall 202 proximate to the base 203), to allow draining of the liquid (e.g., water) collected in the flow reversal chamber 209. A drain plug (not shown) may be removably coupled to the drain 211 and used to plug the drain 211. If the level of liquid (e.g., water) collected in the flow reversal chamber 209 rises above a predetermined level (e.g., determined by a level sensor), the drain plug may be removed to drain the liquid from the flow reversal chamber 209.

The axial flow filter media pack 212 comprises a porous material having a predetermined pore size and configured to filter particulate matter from a fluid flowing therethrough so as to produce filtered fluid. In some embodiments, the axial flow filter media pack 212 may include a tetrahedral filter media pack which may include pleats, for example, any of the tetrahedral filter media as described with respect to FIGS. 2-16. In other embodiments, the axial flow filter media pack 212 may include a fluted media pack, an origami media pack, a straw media pack or any other suitable filter media pack.

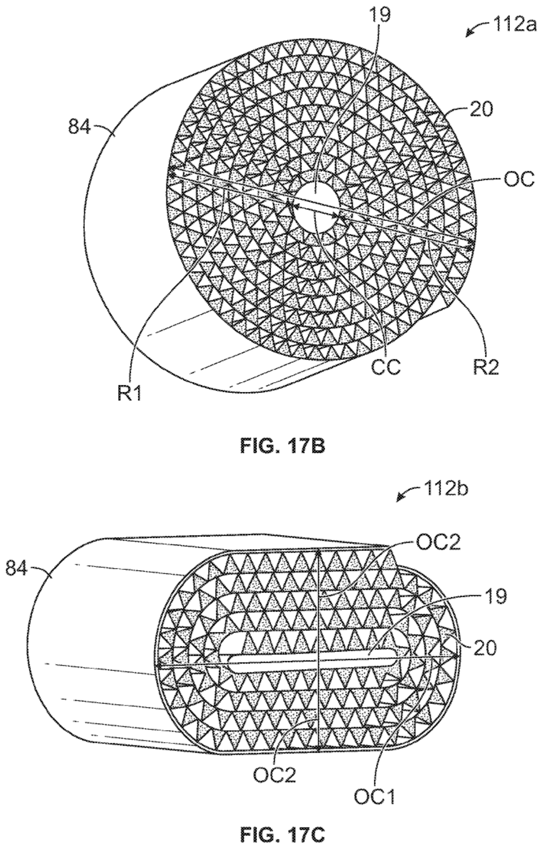

The axial flow filter media pack 212 may have any suitable cross-sectional shape corresponding to the cross-sectional shape of the housing 201. In some embodiments, the axial flow filter media pack 212 may have a circular cross-section. For example, the axial flow filter media pack 212 may include the axial flow filter media pack 112a/b coiled into a circular shape as shown in FIG. 17B (filter media pack 112a), or a racetrack shape as shown in FIG. 17B (filter media pack 112b). While, the axial flow filter media pack 112a and 112b of FIGS. 17B and 17C, respectively is substantially similar to the filter media packs formed from 112a and 112b of FIGS. 9 and 10 respectively, different therefrom, a channel 19 is defined through the filter media packs 112a and 112b of FIGS. 17B-17C to allow filtered fluid to flow in a reverse direction towards the outlet 208. Therefore, the outer cross-sectional distance OC of the filter media pack 112a of FIG. 17B includes a sum of: (a) a cross-sectional distance (e.g., diameter) of the channel 19; (b) a first radial distance R1 from an inner surface of the filter media pack 112a forming the channel at a first location to an outer surface of the filter media 112a proximate to the first location; and (c) a second radial distance R2 from the inner surface of the filter media pack 112a at a second location opposite the first location, to the outer surface of the filter media pack 112a proximate to the second location.

At least a portion of the filter media pack 212 has an outer cross-sectional distance OC (e.g., diameter or width) which is substantially equal to the inner cross-sectional distance IC (e.g., diameter or width) of the internal volume of the housing 201. For example, the filter media pack 212 may be a cylindrical or coiled filter media having at least a portion that has an outer diameter which is equal to or greater than 98% of an inner diameter of the filter housing 201. In some embodiments, a distance D between inner surface of the sidewall 202 and the radial outer surface of the filter media pack 212 may be in a range of 0.1 mm to 5 mm. In embodiments in which the filter media pack 212 has various unequal cross-sections, each cross-section of the filter media pack 212 may be substantially equal to a corresponding cross-section of the filter housing 201. It should be appreciated that while FIG. 17A shows the filter media pack 212 as having a constant outer cross-section, in other embodiments, the filter media pack 212 may have a variable cross-section (e.g., a tapered cross-section).

The outer cross-sectional distance OC of at least a portion of the filter media pack 212 being substantially equal to the inner cross-sectional distance IC of the filter housing 201 causes the radial outer surface of the filter media pack 212 to be close enough to the inner surface of the sidewalls 202 to provide at least partial sealing, and to some degree structural support. Furthermore, this allows more efficient use of the internal volume of the housing, provides increased filter media area for increased capacity, reduces face velocity and pressure drop, therefore increasing an overall filtering efficiency of the filter assembly 200.

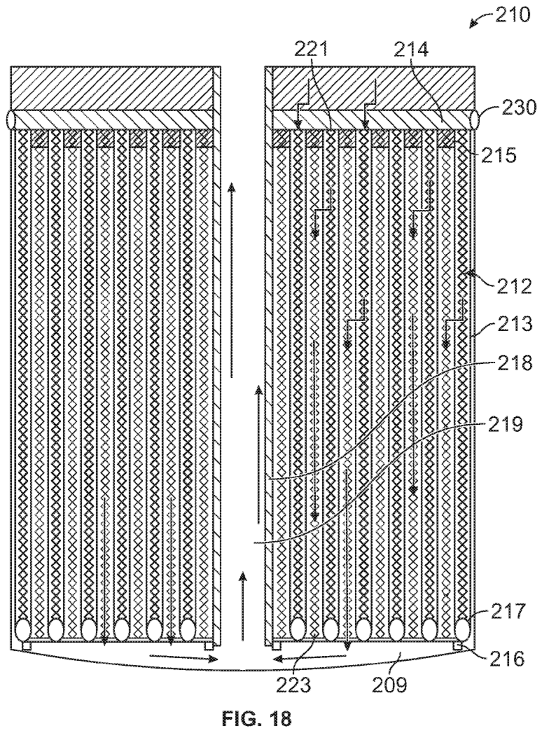

FIG. 18 is a side cross-section view of the filter element 210, according to a particular embodiment. The filter media pack 212 of the filter element 210 includes a plurality of filter media layers 213. Inlet sealing members 215 (e.g., a polymeric seal or adhesive) are disposed between alternate filter media layers 213 proximate to the first support structure 214 to block flow into outlet channels 223 formed between the corresponding filter media layers 213. Furthermore, inlet channels 221 are formed between filter media layers 213 between the inlet sealing members 215. Contaminated fluid flows through the first support structure 214 and enters the inlet channels 221

Outlet sealing members 217 are positioned between alternate filter media layers 213 proximate to the second support structure 216 opposite the inlets of the inlet channels 221, and block flow out of inlet channels 221. The flow outlet channels 223 are defined between the filter media layer 213 opposite the inlet sealing members 215. As the fluid enters the inlet channels 221, the fluid is forced to flow from the inlet channels 221 through the filter media layer 213 into the outlet channels 223 and onwards into the flow reversal chamber 209. Contaminants are trapped in the filter media layers 213 as the fluid flows therethrough, and filtered fluid flows out of the outlet channels 223.

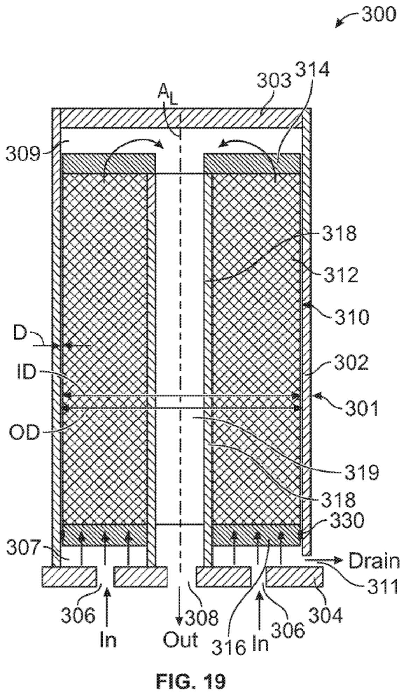

FIG. 19 is a schematic illustration of a filter assembly 300, according to another embodiment. The filter assembly 300 may be used to filter a gas (e.g., air) or another fluid provided to an engine. The filter assembly 300 comprises a filter housing 301 and a filter element 310, which may be substantially similar to the filter housing 201 and filter element 210, respectively.

The filter housing 301 defines an internal volume having an inner cross-section IC, within which the filter element 310 is positioned. The filter housing 301 includes a base 303 and a sidewall 302 projecting perpendicular to base 303 from an outer edge of the base 303. The filter element 310 includes an axial flow filter media pack 312 defining a channel 319 therebetween. The axial flow filter media pack 312 is configured to allow fluid to flow therethrough along longitudinal axis $A_L$ thereof in a first direction and be filtered. A first support structure 314 (e.g., a grid or mesh) is coupled to a first end of the axial flow filter media pack 312 proximate to the base 303, and a second support structure 316 (e.g., a grid or mesh) is coupled to a second end of the axial flow filter media pack 312 opposite the first end. In some embodiments, a center tube 318 (e.g., a non-porous center tube) may be positioned in the channel 319. While shown as including two support structures 314, 316, in other embodiments, the filter element 310 may have a single support structure coupled to a longitudinal end of the filter media pack 312 at which the fluid exits the filter media pack 312 after passing therethrough, for example, the longitudinal end proximate to the base 303.

A cap 304 or cover is coupled to an end of the filter housing 301 opposite the base 303 such that an inlet chamber 307 is defined between the second support structure 316 and the cap 304. The cap 304 may be removably coupled to the sidewall 302, for example, via threads, a snap-fit mechanism, a friction-fit, clamps, screws, nuts or any other suitable removable coupling mechanism. In some embodiments, one or more inlets 306 may be defined in the cap 304 to allow unfiltered fluid to enter the internal volume of the filter housing 301. In other embodiments, the inlet 306 may be defined in the sidewall 302 proximate to the cap 304. Furthermore, an outlet 308 may also be defined in the cap 304. The outlet 308 is sealed from the inlet chamber 307, for example, by the center tube 318. The cap 304 is removably coupled to the filter housing 301 so as to allow insertion and/or removal of the filter element 310 from the internal volume of the filter housing 301. In other embodiments, the cap 304 may be permanently secured to the filter housing 301, such that the filter element 310 is not removable from the filter housing 301 without a physical destruction of the filter housing 301. The cap 304 may be formed from any suitable material, for example, metal, plastics, polymers, elastomers, rubber, reinforced rubber, etc. In some embodiments, filter element 300 may be configured to be coupled to a filter head (e.g., spun-on the filter head). In such embodiments, the cap 304 may be excluded.

Different from the filter assembly 200, the cap 304 is located at a lower elevation relative to the base 303. The inlet 306 defined by the cap 304 allows the fluid to enter the inlet chamber 307 located at the lower elevation. A flow reversal chamber 309 is defined between the first support structure 314 and the base 303. The filter fluid changes a flow direction in the flow reversal chamber 309 from the first direction towards a second direction opposite the first direction, and flows through the channel 319 towards the outlet 308. A sealing member 330 (e.g., an O-ring or a gasket) may be disposed between the second support structure 316 and the sidewall 302 so as to prevent contaminated fluid from flowing around the filter media 312, as previously described with respect to the sealing member 130, 230.

As the inlet chamber 307 is located at a lower elevation relative to the flow reversal chamber 309, a liquid (e.g., water, oil droplets, etc.) may collect in the inlet chamber 307. A drain 311 may be provided in the inlet chamber 307 (e.g., defined in the cap 304 or the sidewall 302 proximate to the cap 304), to allow draining of the liquid (e.g., water) collected in the inlet chamber 307. A drain plug (not shown) may be removably coupled to the drain 311 and used to plug the drain 311. If the level of liquid (e.g., water) collected in the inlet chamber 307 rises above a predetermined level (e.g., determined by a level sensor), the drain plug may be removed to drain the liquid from the inlet chamber 307.

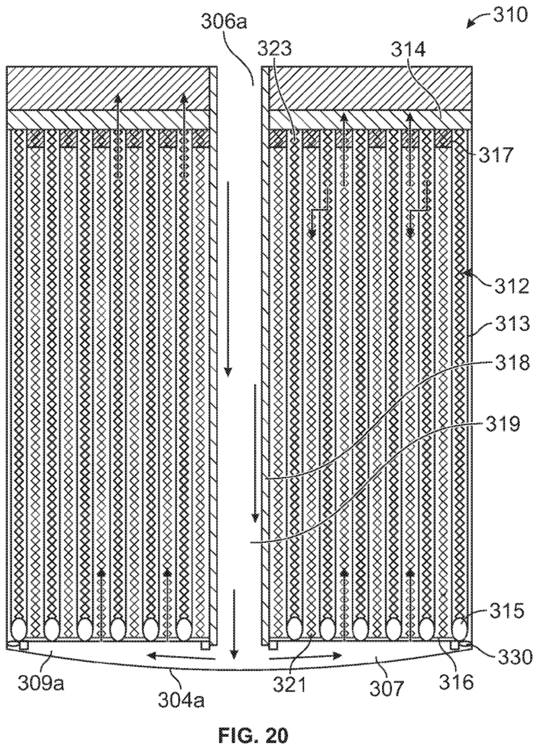

FIG. 20 is a side cross-section view of the filter element 310, according to a particular embodiment. The filter media pack 312 of the filter element 310 includes a plurality of filter media layers 313, as described with respect to the filter element 310. Inlet sealing members 315 (e.g., a polymeric seal or adhesive) are disposed between alternate filter media layers 313 proximate to the second support structure 316 to block flow into outlet channels 323 formed between the corresponding filter media layers 313. Furthermore, inlet channels 321 are formed between filter media layers 313 between the inlet sealing members 315. Contaminated fluid enters an inlet 306a defined in a center tube 318 disposed in a central channel defined by the filter media pack 312, experiences a change in direction in a flow reversal chamber 309a defined between a base 304a of a filter housing (e.g. the filter housing 301) in which the filter element 310 is disposed and the filter element 310, and flows through the first support structure 314 and enters the inlet channels 321

Outlet sealing members 317 are positioned between alternate filter media layers 313 proximate to the second support structure 316 opposite an inlet end of the inlet channels 321, and block flow out of inlet channels 321. The outlet channels 323 are defined between the filter media layer 313 opposite the inlet sealing members 315. As the fluid enters the inlet channels 321, the fluid is forced to flow from the inlet channels 321 through the filter media layer 313 into the outlet channels 323 and onwards into the flow reversal chamber 309. Contaminants are trapped in the filter media layers 313 as the fluid flows therethrough, and filtered fluid flows out of the outlet channels 323 into the flow reversal chamber 309.

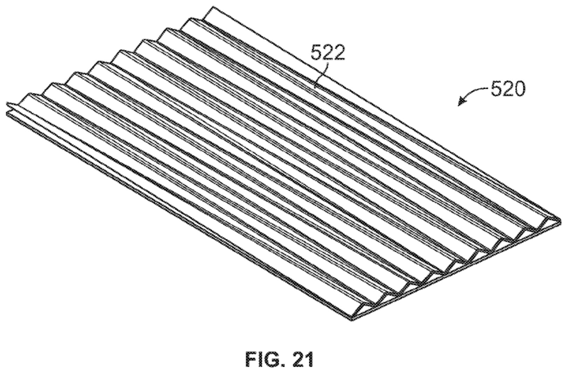

In various embodiments, any of the filter assemblies described herein may include a wall flow filter media pack, a flow through filter media pack, or any other suitable filter media pack. For example, FIG. 21 shows an example filter media layer 520 having a plurality of variable shaped corrugations of pleats 522, similar or identical to the filter media 20 described with respect to FIG. 4.

In some embodiments, any of the filter media described herein may include a filter media layer folded along an axis thereof such that a channel or pocket is formed between the folds of the filter media. The filter media may be rolled or coiled to form a coiled filter media pack. Such filter media may allow fluid flow into the filter pocket without the use of media corrugation. Such filter media may also include an influent and/or effluent flow mesh designed to allow fluid flow to exit the cavities between the concentric media pocket layers.

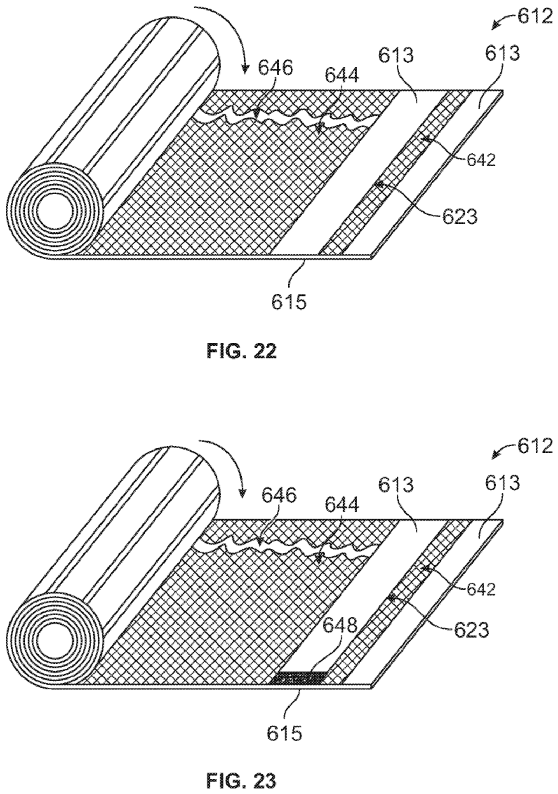

For example, FIG. 22 is top perspective view of a coiled filter media pack 612, a portion of which is unrolled to show various layers included therein, according to an embodiment. The filter media pack 612 includes a filter media layer 613 folded along a folding axis 615 thereof such that a first edge of the filter media layer 613 is proximate to an opposite edge of the filter media layer 613 after being folded, and a filter channel or filter pocket 623 is formed by the filter media layer 613, i.e., by the space formed between the folded portions of the filter media layer 613. The filter media pack 612 comprises a cylindrical roll of the filter media layer 613 rolled along its folding axis 615. In other words, the folding axis 615 is oriented perpendicular to longitudinal axis of the filter media pack 612, but the direction of rotation is along the folding axis 615.

The filter pocket 623 is configured to receive unfiltered fluid. The unfiltered fluid enters the filter pocket 623 and flows through the filter media layer 613 which traps the contaminants or particles, and clean fluid flows out of the filter media pack 612. In some embodiments, the filter media layer 613 includes a single thin layer, for example, having a thickness of less than 1 mm. The thin filter media layer 613 may provide equal or better performance than thicker filter media layers, thereby allowing packing of more filter media layers 613 in a smaller place. The filter media layer 613 include a fully synthetic nanofiber formed from synthetic fiber, cellulose, glass fiber, polymers (e.g., polyester), any other suitable material or a combination thereof. In some embodiments, a backing sheet (e.g., a scrim layer or a thin layer of a fully synthetic material) may be coupled to, for example, laminated on the filter media layer 613.

An influent flow mesh 642 may be disposed in the filter pocket 623. The influent flow mesh 642 may be formed from a polymeric or metallic material and is designed to minimize restriction caused by fluid flow in the axial direction, for example, by maintaining a flow space between the folded portions of the filter media layer 613. In some embodiments, the influent flow mesh 642 may be free floating within the filter pocket 623, as shown in FIG. 22. In other embodiments, the influent flow mesh 642 may be glued or sonic welded into the filter pocket 623. For example, FIG. 23 shows the filter media 612 in which the filter media layer is bonded to itself and/or the influent flow mesh at a bond 648 formed along the folding axis 615. The bond 648 may be formed via an adhesive or sonic welding.

In some embodiments, the filter media pack 612 further comprises an effluent flow mesh 644 disposed on a surface of the filter media layer outside the filter pocket 623. The effluent flow mesh 644 may also be formed from a polymeric or metallic material and is configured to minimize fluid flow in the axial direction in outlet channels formed between outer surfaces of the filter pocket 623 when the filter pocket 623 is rolled to form the coiled filter media pack 612. The effluent flow mesh 644 may also serve as a support structure to prevent telescoping of the coiled filter media pack 612, for example, by providing a high friction material in the cavities or flow channels formed between the concentric filter pockets 623. In some embodiments, the effluent flow mesh 644 may be secured to the filter media layer 613 via a layer or strip of a sealant 646 (e.g., an adhesive) disposed parallel to, and distal from the folding axis 615 of the filter media layer 613.

The influent flow mesh 642 and the effluent flow mesh 644 may have different geometries and/or thicknesses. For example, the influent flow mesh 642 may have a first thickness and the effluent flow mesh 644 may have a second thickness smaller than the first thickness. The thicker influent flow mesh 642 allows fluid and particles to freely flow in the filter pocket 623, and the thinner effluent flow mesh 644 is sufficient to accommodate filtered fluid flow through and out of outlet flow channels formed between the rolls of filter media pack 612. Dissimilar thicknesses may provide the benefit of reducing pitch, so as to allow more filter media layer 613 coils to be packed in the same volume. In some embodiments, the influent flow mesh 642 and the effluent flow mesh 644 may have a thickness in a range of 0.5 - 1.0 mm.

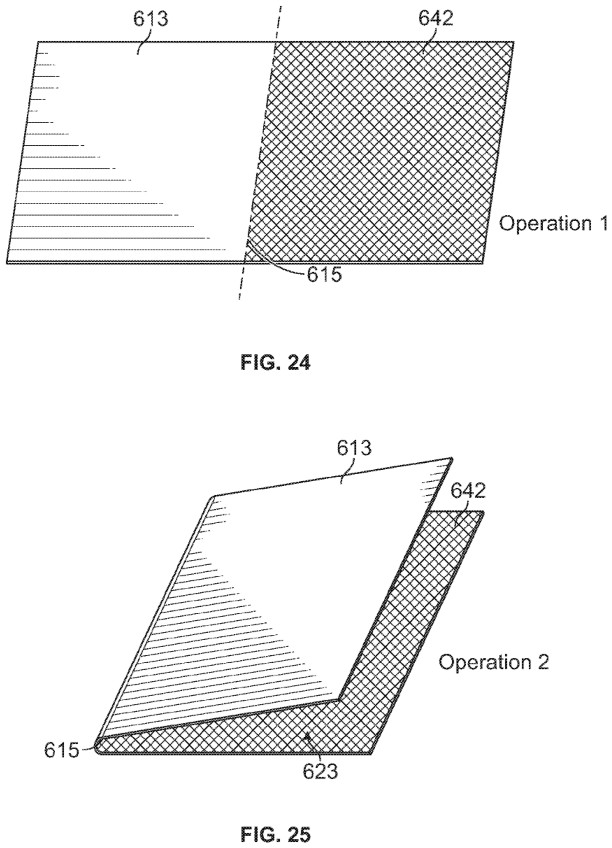

FIGS. 24-28 are schematic illustrations showing various operations for forming the filter media pocket 623 from the filter media layer 613. At operation 1, FIG. 24, the folding axis 615 of the filter media layer 613 is defined and the influent flow mesh 642 is positioned on a portion of the filter media layer 613 located on one side of the folding axis 615. At operation 2, FIG. 25, the filter media layer 613 is folded along the folding axis 615 such that the filter pocket 623 is formed between folded portions of the filter media layer 613, and the influent flow mesh 642 is interposed between the folded portions of the filter media layer 613 such that the influent flow mesh 642 is positioned within the filter media pocket 623.

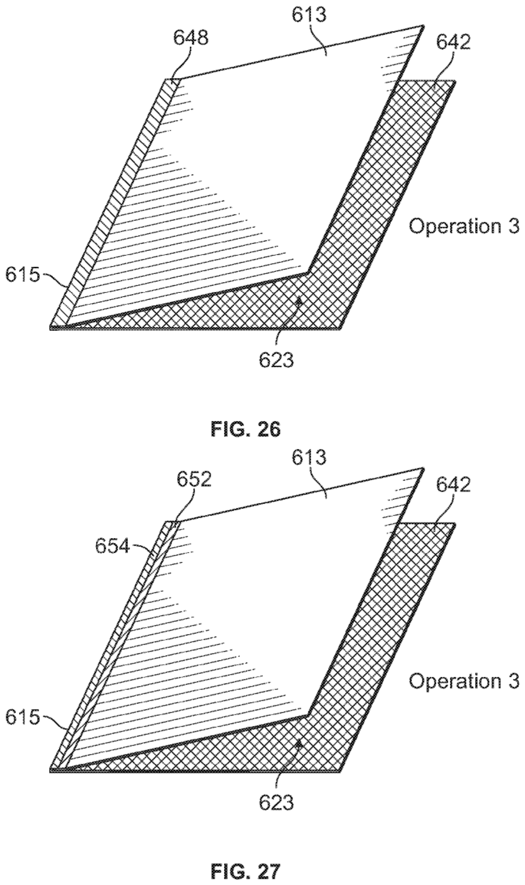

In some embodiments, a bond 648, for example, a sonic or thermal weld may be formed along the folding axis 615 of the filter media layer 613, at operation 3, FIG. 26. In other embodiments a sealant (e.g., an adhesive strip) may be disposed along the folding edge. The weld 648 or sealant bonds the filter media layer 613 to itself and/or to the influent flow mesh 642 along the folding axis 615. For example, the sonic or thermal bonding of the folded portions of the filter media layer 613 at the bond 648 to form the filter pocket 623 may be accomplished by welding the folded portions of the filter media layer 613 together directly to form the filter pocket 623 as shown in FIG. 26. The influent flow mesh 642 can be inserted into the filter pocket 623 later in the production process. In other embodiments, the influent flow mesh 642 may be sonic or thermal bonded between the folded portions of the filter media layers 613 directly so that the bond 648 at the bottom contains the influent flow mesh 642 interposed between the folded portions of the filter media layer 613 at the folding axis 615. In some embodiments, weldable fiber may be provided proximate to the folding axis to help seal the bottom of the filter pocket 623 proximate to the folding axis 615 when using a non-weldable influent flow mesh material

In other embodiments and shown in FIG. 27, operation 3 may include forming a first bond 652 (e.g., a sonic or thermal weld) proximate to the folding axis 615 to couple a backing sheet (e.g., a scrim layer or laminate) disposed on a surface of the filter media layer 613 inside or outside the filter pocket 623. A second bond 654 (e.g., a sonic or thermal weld) is formed adjacent to the first sonic weld 652 along the folding axis 615 to couple the folded portions of the filter media layer 613 and form the filter pocket 623. Such configurations prevent the backing sheet from delaminating from the filter media layer 613 at the stressed bottom edge of the filter media located at folding axis 615. The influent flow mesh 642 may be disposed in the filter pocket 623 after the bonds 652, 654 are formed, or bonded between the folded portions of the filter media layer 613, as previously described herein.

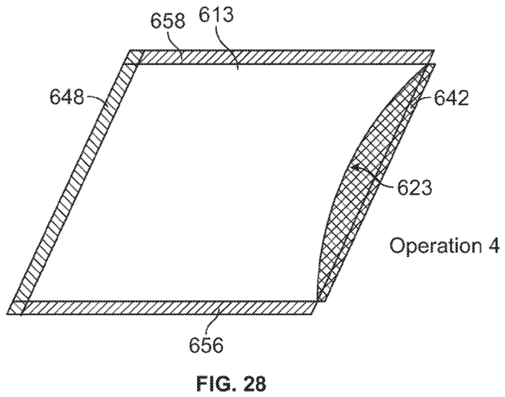

In some embodiments, a third sonic weld 656 and a fourth sonic weld 658 may be formed along edges of the folded portions of filter media layer 613 perpendicular to the folding axis 615, at operation 4, FIG. 28. This causes the fluid to flow into the filter pocket 623 only at an axial inlet of the filter pocket 623 and may prevent fluid leakage from the edges perpendicular to the folding axis.

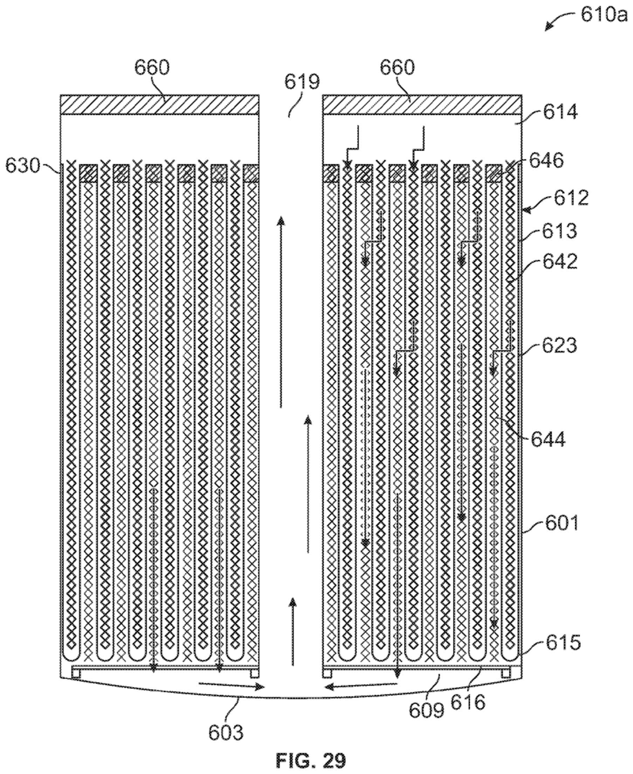

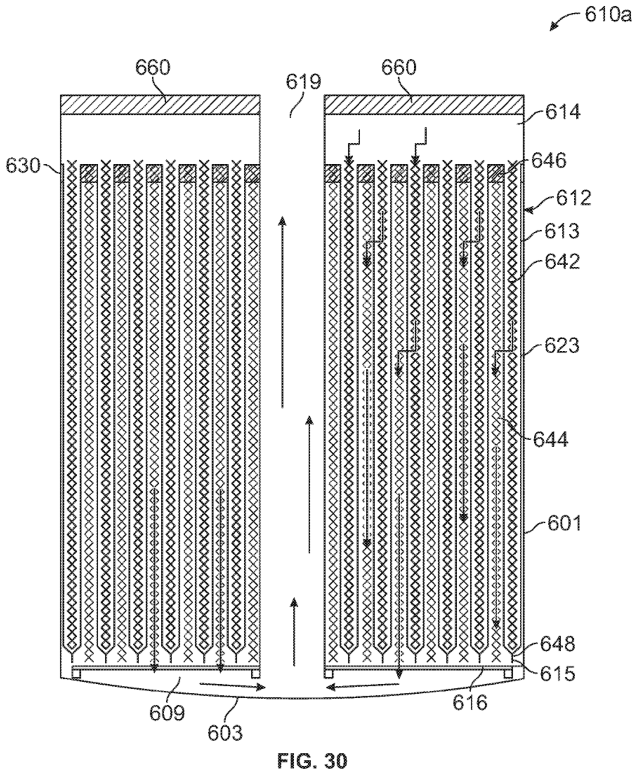

FIG. 29 is a side cross-section views of a filter element 610a, according to an embodiment. The filter element 610a includes the coiled filter media 612 including the filter media layer 613 rolled into a coil. A first support structure 614 (e.g., a grid or mesh) coupled to a first end of the filter media pack 612 proximate to the folding axis 615 of the filter media layer 613, and a second support structure 616 (e.g., a grid or mesh) is coupled to a second end of the filter media pack 612 opposite the first end. FIG. 30 is a side cross-section view of a filter element 610b, which is substantially similar to the filter element 610a and includes similar components, except that the sonic weld 648 is formed along the folding axis 615 of the filter media layer 613, as previously described herein.

A channel 619 is defined through a longitudinal axis of the filter media pack 612. A center tube (e.g., the center tube 218, 318) may be disposed in the channel 619. The channel 619 allows the filter element 610a/b to be operated in reverse flow mode, as previously described with respect to the filter element 210, 310. In such embodiments, the fluid after passing axially through the filter media pack 612 recirculated in a flow reversal chamber 609 formed between the second support structure 616 and a base 603 of a housing 601 in which the filter element 610a/b is disposed. In other embodiments, unfiltered fluid may first enter the channel 619 and then change a flow direction thereof to enter the filter media pack 612. In still other embodiments, the channel 619 may be excluded such that the filter element 610a/b is configured to provide axial flow through filtration, as previously described herein with respect to the filter element 110.

As shown in FIGS. 29-30, the filter pocket 623 is formed between folded portions of the filter media layer 613, and the influent flow mesh 642 is disposed in the filter pocket 623. The effluent flow mesh 644 is disposed between adjacent filter pockets 623. The sealant 646 (e.g., a polymeric seal or adhesive) is disposed between the filter pockets 623 proximate to the first support structure 614 to prevent fluid flow into the outlet channels formed between adjacent filter pockets 623. Unfiltered fluid flows axially into the filter pockets through the first support structure 614. The fluid then passes through the filter media layer 613 and is filtered. The filtered fluid then flows axially outwards through the outlet channels into the flow reversal chamber 609, and out of the filter element through the channel 619. In some embodiments, the filter media pack 612 may be used in a filter assembly configured for in-line flow with no flow reversal.

An upstream filter media 660 may be disposed upstream of the filter element 610a/b. The upstream filter media 660 may include a coarse filter media layer having a pore size which is larger than a pore size of the filter media pack 612. The upstream filter media pack 612 is configured to filter out large particles which may block fluid flow into the filter pockets 623. In some embodiments, the upstream filter media 660 may include but is not limited to a woven or non-woven mesh, synthetic filter media, cellulose filter media, or gradient pore size filtration media layer into a composite. While FIGS. 29-30 show the upstream filter media 660 being coupled to the first support structure 614, in other embodiments, the upstream filter media 660 may be disposed at any suitable location upstream of the filter element 610a/b. In other embodiments, the upstream filter media 660 may include disc of filter media, an axial flow filter stage is series with the filter element 610, disposed in the filter housing 601 or a separate filter housing upstream of the filter housing 601.

The coiled filter media pack 612 may provide several advantages including, for example, improving media packing density (i.e., filter media surface area) in the same filter volume by packing the filter media layer 613 in a dense coil and providing filter pockets 623 therein, while preventing flow restriction increase by use of the influent and effluent flow mesh 642 and 644. Increase in packaging density of the filter media pack 612 in the same filter volume increases the capacity of the filter media pack 612 and reduces service intervals, thereby reducing maintenance costs. The coiled filter media pack 612 may also reduce face velocity of the fluid, which can improve contaminant removal from the fluid.

The outer coil layer of the any of the coiled filter elements, for example, the filter element 610a/b tend to balloon outward if not properly restrained. The ballooning of the outer coil layer causes a stress concentration point where the filter media (e.g., the filter media pack 612) can fail. Restraining this ballooning can increase the life of a coiled filter element. Restraining the ballooning can be accomplished by a polymeric or metallic, woven, non-woven or extruded mesh or media basket around the entire effluent side of the filter media. Another option is to use a polymeric or metallic, woven, non-woven or extruded mesh or layer as an outer wrap or band wound around the filter media. In some embodiments, the outer wrap may be disposed only on the outer most wall of the effluent side of the filter media, not including the bottom end of the filter media. In particular embodiments, ballooning may be restricted by providing a housing having an inner cross-section such that an outer cross-sectional distance (e.g., diameter, width, etc.) of the filter media is substantially equal to an inner cross-sectional distance (e.g., diameter, width, etc.) of the housing, for example, as previously described with respect to the filter element 110, 210, 310. In such embodiments, the sidewall (e.g., the sidewall 102, 202, 302) of the housing (e.g., the housing 101, 201, 301) restricts ballooning of the filter media housed therein.

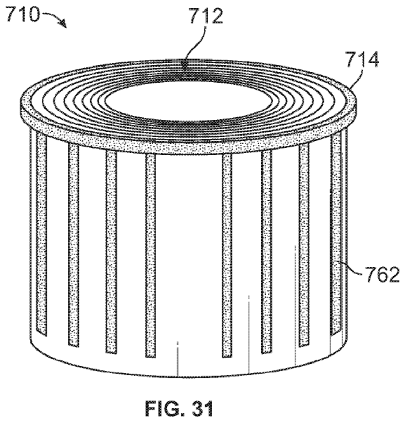

In some embodiments, tabs or ribs may be used to restrict ballooning of a coiled filter media. For example, FIG. 31 is a perspective view of a filter element 710, according to an embodiment. The filter element 710 includes a coiled filter media pack 712 (e.g., any of the coiled filter media described herein). A support structure 714 (e.g., a grid, mesh or an end plate) is coupled to a longitudinal end of the filter media pack 712. Ribs or tabs 762 extend axially from a rim of the support structure 714 along the outer surface of the filter media at least part way towards the opposite longitudinal end of the filter media pack 712. The ribs 762 may be formed from a sufficiently strong material (e.g., polymers such as polyurethane) that can resist ballooning of the filter media pack 712. In some embodiments, the ribs 762 may be bent around the opposite end of the filter media pack 712 and extend onto a bottom surface of the filter media pack 712 located at the opposite longitudinal end. In such embodiments, the ribs 762 may act as a bottom end pate and prevent telescoping of the filter media pack 712, that may occur at high fluid pressures. In still other embodiment, one or more ribs may be disposed circumferentially around the filter media pack 712.

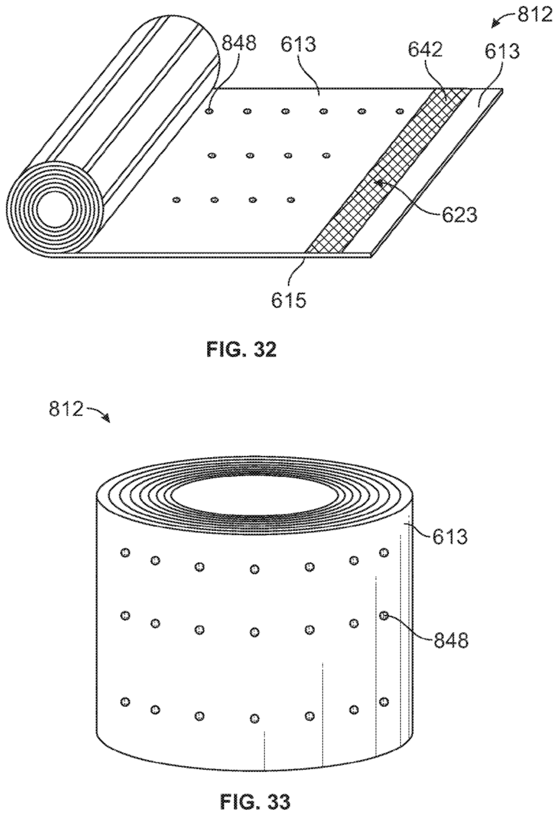

In some embodiments, ballooning may be prevented by forming point bonds at various locations on the filter media pack. For example, FIG. 32 shows a partially unrolled coiled filter media pack 812 including the filter media layer 613 which is folded along the folding axis 615 to form the filter pocket 623, and having the influent flow mesh 642 disposed in the filter pocket 623, as previously described herein. A plurality of points bonds 848 (e.g., sonic or thermal welds) are formed at various locations on the outer surface of the filter media layer 613 through the filter pocket 623 of the outer most coil of the filter media pack 612. FIG. 33 shows a perspective view of the coiled filter media pack 812 showing the plurality of point bonds 848 formed on the outer surface of the coiled filter media pack 812. The plurality of point bonds 848 may reduce stress on the outer most coil of the filter media pack 812 without the use of external parts to prevent ballooning.

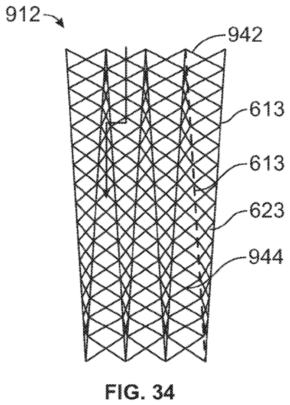

In some embodiments, the influent and/or effluent flow mesh may have a continuously varying thickness from one longitudinal end to an opposite longitudinal end of a filter media. For example, FIG. 34 is a cross-section of a portion of a filter media pack 912, according to an embodiment. The filter media pack 912 includes the filter media layer 613 folded to define the filter pocket 623. An influent flow mesh 942 is disposed in the filter pocket 623, and an effluent flow mesh 944 is disposed between adjacent filter pockets 623. The influent flow mesh 942 has a continuously varying thickness which decreases from an inlet end of the filter media pack 912 through which the fluid enters the filter media pack 912 towards the opposite outlet end of the filter media pack 912. The larger thickness near the inlet end lowers backpressure on the fluid entering the filter pocket 623, and the decreasing thickness towards opposite causes a proportional increase in backpressure on the fluid urging the fluid to flow through the filter media layer 613.

Conversely, the effluent flow mesh 944 has a continuously varying thickness that increases from the inlet end of the filter media pack 912 towards the outlet end. The increasing thickness towards the outlet end provides lower back pressure on the fluid flowing towards the narrower outlet end of the filter media pack 912. This facilitates flow of the fluid through the filter media layer 613 from the filter pocket 623 to the outlet channels channel therebetween.

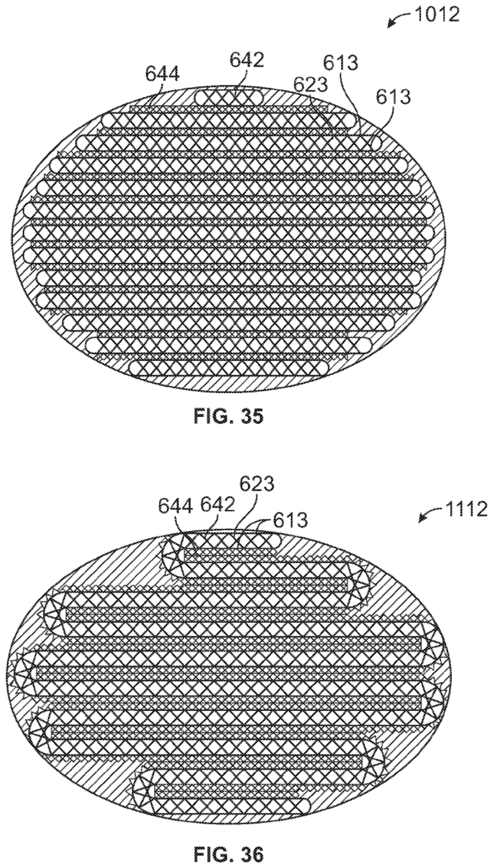

In some embodiments, a plurality of filter pockets having different lengths formed may be layered or stacked on each other to form a filter media having a desired shape. For example, FIG. 35 is a top cross-section view of a filter media pack 1012. The filter media pack 1012 includes a plurality of filter pockets 623 forming the filter media pack 1012, as previously described herein. Each of the plurality of filter pockets 623 is physically separate from an adjacent filter pocket 623. The influent flow mesh 642 is positioned within each of the filter pockets 623 and the effluent flow mesh 644 is disposed between each adjacent filter pocket 623. The filter pockets 623 have different lengths with the outer most filter pockets 623 having the smallest length, the filter pocket 623 located along a central axis of the filter media pack 1012 having the longest length, and the filter pockets 623 disposed between the outer most filter pockets 623 and the central filter pocket 623 having an increasing length from the outside to the center causing the filter media pack 1012 to have an oval cross-section. In other embodiments, different length layers can be used to form filter media having any other shape, for example, circular, oblong, racetrack, trapezoidal, square, rectangular, polygonal, semi-circle, crescent, wedge, etc.

FIG. 36 is a top cross-section view of a filter media pack 1112, according to another embodiment. The filter media pack 1112 includes the filter media layer 613 defining the filter pocket, as previously described herein. Different from the filter media pack 1012, the filter pocket 623 of the filter media pack 1112 is folded multiple times along its width to form a stack. Each fold is performed at a longer distance along a width of the filter pocket 623 relative to a previous fold from the outer most fold to a fold located along a central axis of the filter media pack 1112. The folding distance from the central axis to the opposite outer end is then decreased for each subsequent fold. This causes the filter media pack 1112 to have an oval cross-section as shown in FIG. 36. However, different fold lengths may be used to form filter media having any other shape, for example, circular, oblong, racetrack, trapezoidal, square, rectangular, polygonal, semi-circle, crescent, wedge, etc.

Various embodiments of the coiled filter elements described herein can be implemented in any suitable configuration. In some embodiments, the coiled filter element may be disposed in a housing (e.g., the housing 101, 201, 301, 601) and an outer edge of the filter element sealed against a corresponding side wall of the housing using hot melt or a reactive sealant. In other embodiments in which the coiled filter element includes a removable cartridge type filter element, a top support structure or end plate may be sealed to a top end of the coiled filter element. For example, the filter element may be sealed into a top endplate skirt via a hot melt or reactive sealant. The top endplate would then be sealed to an inner surface of the filter housing or cap (e.g., a nut plate) using a radial sealing member (e.g., an O-ring or a face seal gasket).

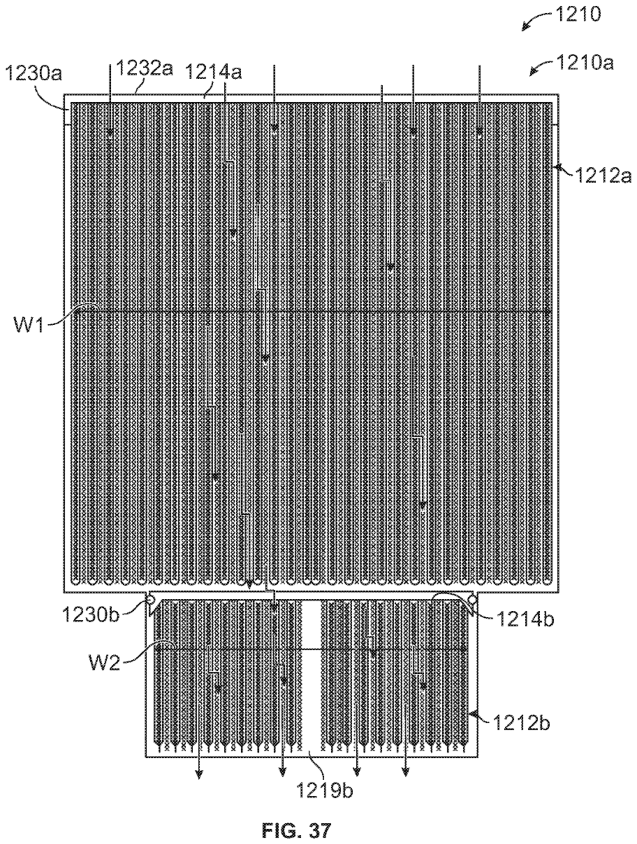

In some embodiments, a filter element assembly may include a plurality of axial flow coiled filter elements arranged in series. For example, FIG. 37 is a side cross-section view of a filter element assembly 1210, according to an embodiment. The filter element assembly 1210 includes a primary filter element 1210a including a primary filter media pack 1212a, as previously described herein. The primary filter media pack 1212a includes a coiled axial flow filter media pack. A first support structure 1214a (e.g., a grid, a mesh, or a perforated end plate) is coupled to an inlet end of the primary filter media pack 1212a. A radial edge 1230a of the first support structure 1214a may be structured to provide radial sealing with an inner sidewall of the housing within which the primary filter media pack 1212a is disposed, and an axial surface 1232a of the first support structure 1214a may be configured to provide axial sealing, for example, with a cap. The primary filter element 1210a has a first width W1 and a first pore size, to provide a first filtering efficiency.

The filter element assembly 1210 also includes a downstream filter element 1210b disposed downstream of the primary filter element 1210a. The downstream filter element 1210b includes a downstream filter media pack 1212b is also an axial flow filter media, but may also define a channel 1219b therethrough, for example, to allow reverse flow of filtered fluid therethrough. In such embodiments, a corresponding channel may also be defined through the upstream filter media pack 1212a. A second support structure 1214b is coupled to a top end of the downstream filter media pack 1212b between the primary filter media pack 1212a and the downstream filter media pack 1212b. A radial sealing member 1230b is disposed around the second support structure 1214b and configured to provide fluidic sealing with a corresponding portion of a filter housing. The downstream filter media pack 1212b may have a width W2 smaller than the first width W1 and may have a smaller pore size so as to provide a higher filtration efficiency than the primary filter element 1210a.

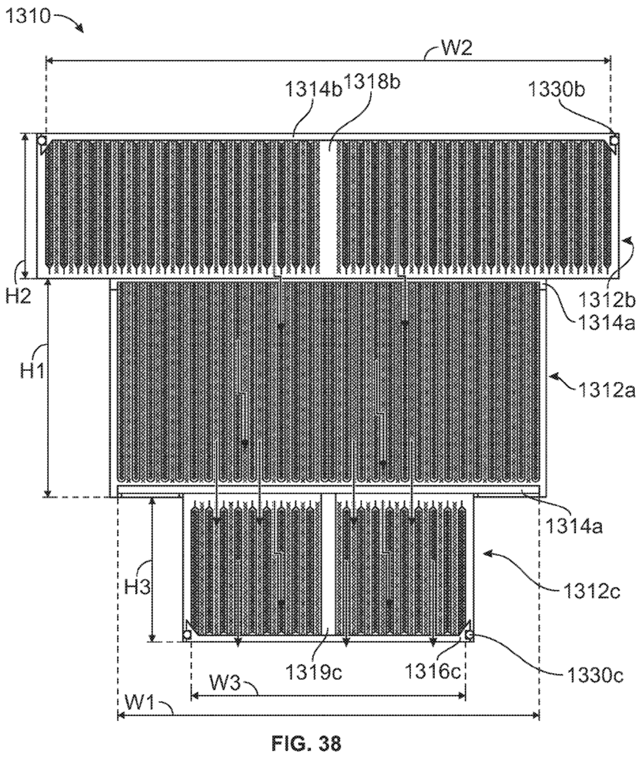

FIG. 38 is a side cross-section view of a filter element assembly 1310, according to another embodiment. The filter element assembly 1310 includes a primary filter element 1310a including a primary filter media pack 1312a, as previously described herein. The primary filter media pack 1312a includes a coiled axial flow filter media. A first support structure 1314a (e.g., a grid, a mesh, or a perforated end plate) is coupled to an inlet end of the primary filter media 1312a. The primary filter element 1310a has a first width W1, a first height H1, and a first pore size, to provide a first filtering efficiency.

The filter element assembly 1310 also includes an upstream filter element 1310b disposed upstream of the primary filter element 1310a, and a downstream filter element 1310c disposed downstream of the primary filter element 1310a. The upstream filter element 1310b includes an axial flow filter media pack 1312b defining a channel 1319b therethrough, for example, to allow flow reversal through the channel 1319b. A second support structure 1314b (e.g., a grid, a mesh or a perforated end plate) is coupled to a top end of the upstream filter media pack 1312b and may prevent telescoping between the primary and upstream filter element 1310a and 1310b. A radial sealing member 1330b is disposed around the second support structure 1314b and configured to provide radial sealing with a sidewall of a filter housing. The primary filter element 1310a has a second width W2 larger than the first width W1, and a second height H2 smaller than the first height H1. Moreover, the upstream filter element 1310b has a second pore size which may be larger than the first pore size of the primary filter element 1310a.

The filter element assembly 1310 also includes a downstream filter element 1310c disposed downstream of the primary filter element 1310a. The downstream filter element 1310c includes a downstream filter media pack 1312c which also includes an axial flow filter media, but also defines a channel 1319c therethrough, for example, to allow reverse flow of filtered fluid therethrough. A third support structure 1314c (e.g., a grid, mesh or perforated end plate) is coupled to a top end of the downstream filter media pack 1312c between the primary filter media pack 1312a and the downstream filter media pack 1312c, and may prevent telescoping. A fourth support structure 1316c (e.g., a grid, mesh or perforated end plate) is coupled to a bottom end of the downstream filter media pack 1312c opposite the top end. A radial sealing member 1330c is disposed around the fourth support structure 1316c and configured to provide fluidic sealing with a corresponding portion of a filter housing. The downstream filter media pack 1312c may have a width W3 smaller than the first width W1 and may have a third pore size smaller than the first pore size so as to provide a higher filtration efficiency than the primary filter media 1310a. While the upstream and downstream filter element 1310b/c may be configured to allow flow reversal in some implementations, in other implementations, all of the filter elements 1310a/b/c may be configured for reverse flow, or only one of the primary filter element 1310a, the upstream filter element 1310b and/or the downstream filter element 1310c may be configured to provide reverse flow, for example, to accommodate architecture of the filter assembly in which the filter element 1310 is included, or based on water handling within the filter assembly.

Thus, the filter element assembly 1310 may provide stage wise progressive filtration efficiency. For example, in some embodiments, the upstream filter media pack 1312b has a pore size of about 12 microns, the primary filter media pack 1312a may have a pore size of about 5 microns, and the downstream filter media pack 1312c may have a pore size of about 3 microns. In other embodiments, the upstream filter media pack 1312b has a pore size of about 5 microns, the primary filter media pack 1312a may have a pore size of about 2 microns, and the downstream filter media pack 1312c may have a pore size of about 3 microns.

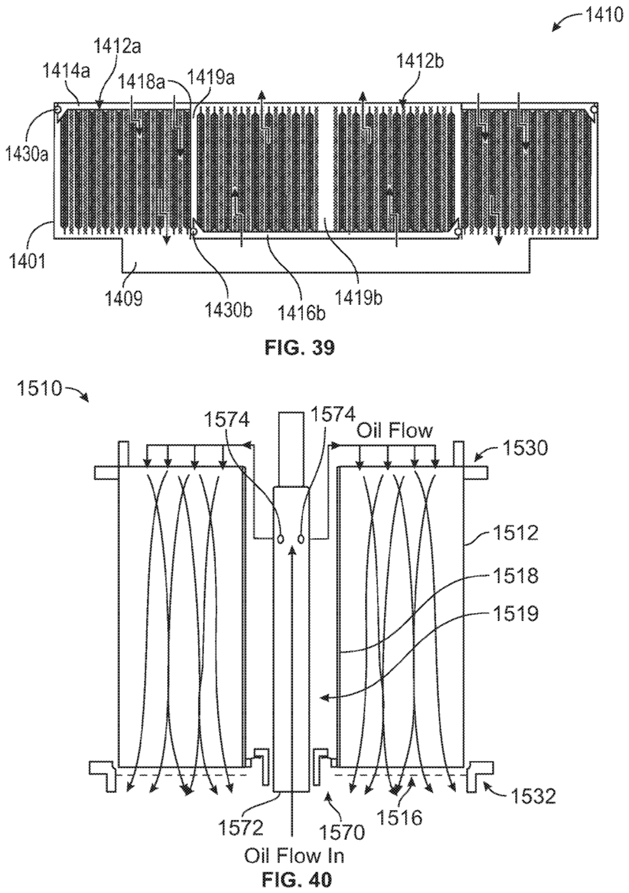

In some embodiments, a filter assembly may include a first filter positioned radially within a channel defined in a second filter such that the second filter at least partially surrounds the first filter. For example, FIG. 39 is a side cross-section view of a filter element assembly 1410, according to an embodiment. The filter element assembly 1410 includes an outer filter media pack 1412a defining a first channel 1419a along a longitudinal axis thereof. In some embodiments, a first center tube 1418a may be positioned in the first channel 1419a. The outer filter media pack 1412a may include a folded filter media, for example, the filter media pack 612, and may include a coiled filter media as previously described herein. A first support structure 1414a is coupled to an inlet end of the filter media pack 1412a and may include a grid or a mesh. The outer filter media is positioned in a housing 1401. A flow reversal chamber 1409 is formed between a base of the housing 1401 and a second end of the outer filter media pack 1412a opposite the first end. A radial seal (e.g., an O-ring or gasket) is positioned around the first support structure and formed a fluid tight seal with a sidewall of the housing 1401.

An inner filter media pack 1412b is positioned in the first channel 1419a defined by the outer filter media pack 1412a, for example, within the first center tube 1418a. The inner filter media 1412b may also include a folded filter media, similar to the outer filter media 1412a. Furthermore, the inner filter media 1412b may include a coiled filter media. In various embodiments, the outer filter media pack 1412a and/or the inner filter media pack 1412b may comprise a tetrahedral filter media, an origami filter media, a straw filter media, a fluted filter media, a corrugated filter media or any other filter media. In some embodiments, the inner filter media pack 1412b may define a second channel 1419b which may have a second center tube (not shown) disposed therein. In particular embodiments, a first end of the second channel 1419b proximate to the flow reversal chamber 1409 is fluidly sealed from the flow reversal chamber 1409, for example, via a sealant. A second support structure 1416b is disposed on an end of the inner filter media pack 1412b proximate to flow reversal chamber 1409, and may include a grid or mesh. A second radial seal 1430b is disposed around the second support structure 1416b and forms a fluid tight seal between the second support structure 1416b and an inner surface of the first center tube 1418a.

In operation, unfiltered fluid enters the first end of the outer filter media pack 1412a and flows out of the second end into the flow reversal chamber 1409. The fluid reverses flow direction in the flow reversal chamber 1409 and enters the inner filter media pack 1412b. The fluid flows through the inner filter media pack 1412b from the first end thereof proximate to the flow reversal chamber 1409 to the second end thereof opposite the first end of the inner filter media pack 1412b. A pore size of the inner filter media pack 1412b may be smaller than a pore size of the outer filter media pack 1412a so that the filter element assembly 1410 provides highly efficient staged filtration with the outer filter media pack 1412a providing the first filtration stage, and the inner filter media pack 1412b provides the second filtration stage.

In some embodiments, any one of the filter assemblies described herein can be used as a high efficiency bypass type filter element in the lubrication system. Flow rates through such systems may be reduced by some type of flow restriction device (e.g., an orifice) to reduce the flow rate, and therefore, a pressure drop across the filter element. Furthermore, any of the coiled filter elements described herein may be used in place of a centrifuge cartridge type filter element. For example, FIG. 40 is a schematic illustration of a rotating filter element 1510 including an axial flow filter media pack 1512. The axial flow filter media 1512 may include a coiled filter media, for example, any of the coiled filter media, as previously described in detail herein. A channel 1519 is defined through the filter media pack 1512 along a longitudinal axis thereof. A center tube 1518 is disposed in the channel 1519.

A support structure 1516 is disposed on an outlet end of the filter media pack 1512 through which filtered fluid (e.g., oil or fuel) exits the filter media pack 1512. The support structure 1516 may include a mesh or a grid. A radial seal 1532 (e.g., an O-ring) is positioned around the second support structure 1516 and configured to form a fluid tight seal with a sidewall of a housing within which the filter media pack 1512 is disposed. In some embodiments, the filter element 1510 may also include an inlet seal 1530 positioned around an inlet end of the filter media pack 1512 opposite the outlet end. The inlet seal 1530 may be configured to form a radial seal and/or axial seal with a side wall of a housing within which the filter element 1510 is disposed and/or a filter head.

A shaft 1572 is positioned in the channel 1519. The shaft 1572 is positioned through a rotor bushing 1570 is coupled to an inner surface of the center tube 1518 at an end thereof proximate to the outlet end of the filter media pack 1512. The rotor bushing 1570 may be fluidly sealed to the inner surface of the housing and prevents the fluid from leaking between the rotor bushing 1570 and the center tube 1518. The shaft 1572 may be defined an axial flow path therethrough. A plurality of openings 1574 are defined in the shaft 1572 proximate to the inlet end of the filter media pack 1512, and configured to communicate unfiltered fluid form the axial flow path into the channel 1519. Rotation of the shaft 1572 causes the fluid (e.g., oil or fuel) to flow up to the inlet end of the filter media pack 1512. The fluid then flows through the filter media pack 1512 and is filtered.

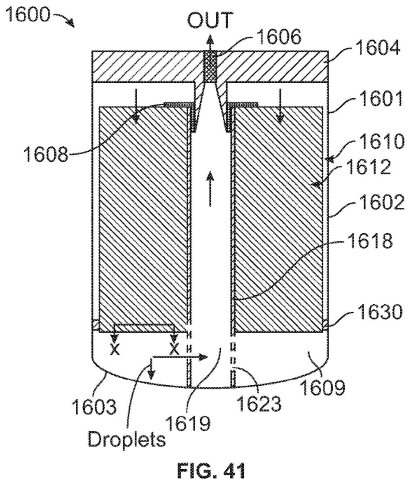

In some embodiments, an axial flow filter media may also be included in a coalescer filter assembly, for example, a static or rotating coalescer filter assembly. For example, FIG. 41 is a schematic illustration of a coalescer filter assembly 1600 including an axial flow filter media pack 1612, according to an embodiment. The filter assembly 1600 includes a housing 1601 defining an internal volume within which a filter element 1610 is disposed. The filter element 1610 includes an axial flow filter media pack 1612 defining a channel 1619 therethrough. A radial seal 1630 is positioned around the filter media pack 1612 around an outlet end of the filter media pack 1612 so as to form a radial seal with a side wall 1602 of the housing 1601. A cap 1604 is coupled to an end of the housing 1601 opposite a base 1603 of the housing 1601, and defines an outlet 1606 therein. In some embodiments, the cap 1604 includes a nut plate. In some embodiments, an outer cross-sectional distance of the filter media pack 1612 may be substantially equal to an inner cross-sectional distance of the housing 1601, as previously described herein.

A center tube 1618 is disposed in the channel 1619 and extends to the base 1603 of the housing 1601 such that a first end of the center tube 1618 is coupled to the base 1603 and a flow reversal chamber 1609 is defined in the housing 1601 between an end of the filter media pack 1612 proximate to the base 1603, and the base 1603 of the housing 1601, as previously described herein. A plurality of apertures 1623 may be defined in the portion of the center tube 1618 disposed in the flow reversal chamber 1609 and allows fluid (e.g., fuel or oil) after passing through the filter media pack 1612 to enter through the apertures 1623 into the channel 1619. A second end of the center tube 1618 is coupled to the outlet 1606 via a grommet 1608. The filter media pack 1612 is configured to coalesce water droplets included in the fluid. The coalesced water droplets collect in the flow reversal chamber 1609, and can be drained therefrom.

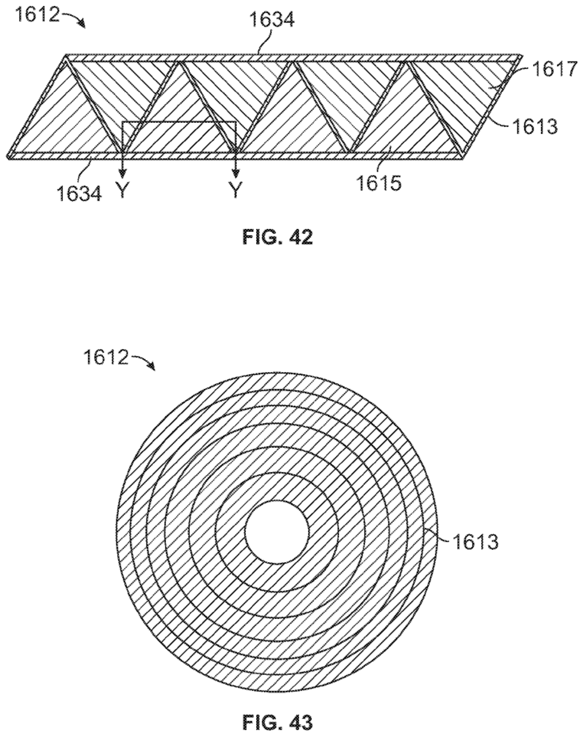

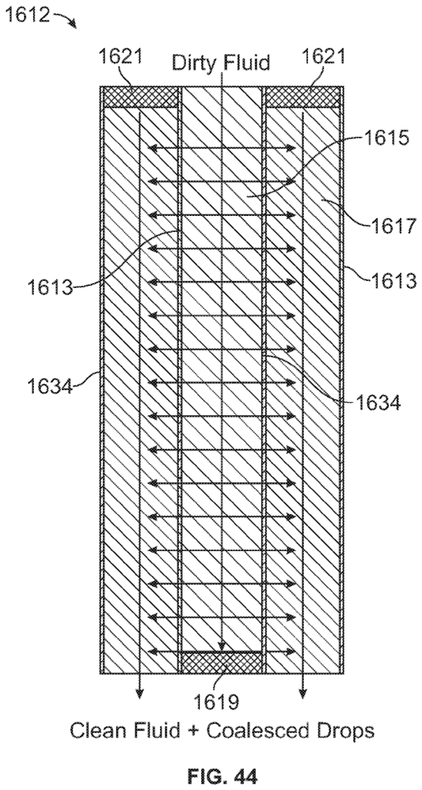

Referring to FIGS. 42-44, the filter media pack 1612 includes a pleated media layer 1613 interposed between layers of a flat media layer 1634. In other embodiments, the filter media pack 1612 may include a non-pleated, origami, a straw, fluted, corrugated, or any other filter media. A plurality of entrance channels 1615 are formed between the plurality of pleats of the pleated media layer 1613 and one of the flat media layers 1634, and a plurality of exit channels 1617 are defined between the plurality of pleats of the pleated media layer 1613 and the other of the flat media layers 1634. The plurality of entrance channels 1615 are open at an inlet end of the filter media pack 1612 and fluidly sealed at an outlet end thereof via a first sealing member 1630. In contrast, the plurality of exit channels 1617 are sealed at the inlet end via a second sealing member 1621, and open at the outlet end of the filter media pack 1612. Dirty fluid enters the entrance channels 1615 and flows through the pleated and flat media layers 1613 and 1634 because an outlet of the entrance channels 1615 is sealed. Any water present in the fluid coalesces in the exit channels 1617, and drops into the flow reversal chamber 1609, wherefrom the water can be removed.

Thus, by using two to three media layers in an axial flow configuration, the overall thickness of the filter media used to form the filter media pack 1612 is reduced and a separator stage of a coalescer can be eliminated. Furthermore, more media layers may be packaged in the same volume, thus increasing the apparent contaminant-capacity and life, while decreasing the face velocity through the filter media 1612. The separator layer is eliminated by using the downward flow of filtered fluid (e.g., a gas or aerosol) and gravity to remove coalesced drops by gravity settling. Coalesced drops are collected in the bottom of the coalescer while clean fluid leaves the filter via a hollow center tube. The filter media used to form the filter media pack 1612 may also include a capture layer and a drainage layer, and may have an optional prefilter layer to remove semisolid and solid contaminants. Thus the filter media may be a composite media.

Various key features of the filter assembly 1600 include: (1) axial flow filtration; (2) design restrictions on pleat heights for pleated media layer 1613; and (3) design of the flow in the bottom drop collection and clean fuel return portion of the filter assembly 1600.

Expanding further, regarding item (2) above, when the pleated and flat media layers 1613 and 1634 are identical, released coalesced drops will be released and migrate towards the center of the channel 1619. Here they will be carried downward by the flow and gravity and settle to the bottom of the housing 1601 in the flow reversal chamber. If, however, two different media are used, such that the pleated media layer 1613 is more open (larger pore size, less restrictive), they will migrate closer to the channel 1619 wall associated with the flat sheet. Depending of the relative differences in the two layers 1613 and 1634, coalesced drops may actually contact/impact on the flat layer wall. In this case, they may accumulate, coalesce further, and drain down the center tube 1618 wall for easier separation. As a practical matter, in this case the flat layer wall becomes a separator stage.

Regarding item (3) above, the pleat height may limit the size of the coalesced drops and influence the pressure drop across the filter media 1612. If the height is too small, coalesced drops can bridge the channel and restrict the flow. Thus, it is desirable to have a pleat height that is greater than 1.75 times the coalesced drop diameter. The coalesced drop diameter is rarely known or measurable, but can be estimated using the drop weight method of determining surface (or interfacial) tension. The relationship between the pore size of the drainage layer and coalesced drop size under stagnant conditions is approximately:

$$D_s\gamma = \frac{4\rho d^3 g}{24} \qquad (1)$$

where

$\gamma$ = interfacial tension between the continuous and dispersed phases,

$D_S$ = pore size (diameter) of the drainage layer.

$\rho$ = density difference between the dispersed and continuous phases,

$d$ = released drop diameter

$g$ = acceleration due to gravity.

Equation 1 allows the coalesced drop size (and hence pleat height) to be related to the pore size of the drainage layer, interfacial tension, and densities of the fluids. It should be noted that equation 1 is only an approximation for drops formed by hanging down from a capillary (pore) under quiescent conditions. In the case of a coalescer, conditions are not quiescent (the continuous phase is flowing) and the drops are oriented approximately 90° from vertical. This implies that the calculated drop size will be an overestimate. Orientation affects drop shape and the angle formed by the drop at the moment of detachment. These two factors, to some extent, offset each other.

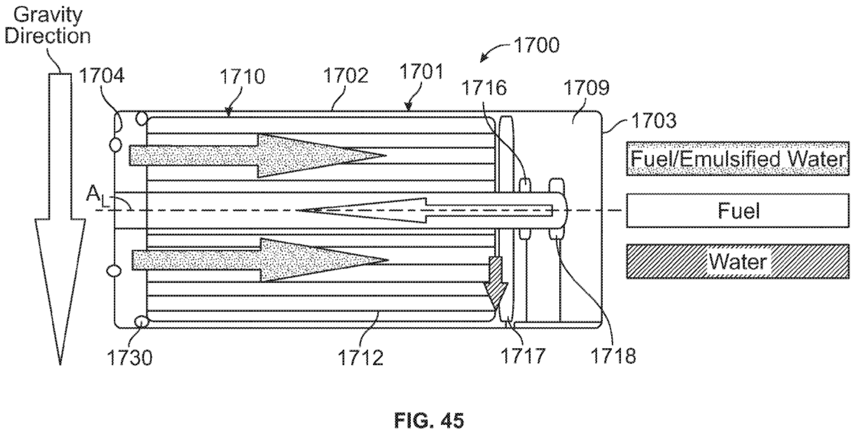

In some embodiments, a filter assembly may be oriented such that a longitudinal axis thereof is oriented substantially perpendicular to a direction of gravity (e.g., at an angle in a range between 80 degrees to 100 degrees) and may further include a coalescing media layer disposed proximate to an effluent or outflow end of the filter assembly. For example, FIG. 45 is a side cross-sectional view of a filter assembly 1700, according to an embodiment. The filter assembly 1700 includes a filter housing 1701 (e.g., a shell housing) defining an internal volume within which a filter element 1710 is disposed. The filter housing 1701 includes a sidewall 1702, a cap 1704 coupled to a first longitudinal end of the filter element 1710, and a base 1703 coupled to a second longitudinal end of the filter element 1710 opposite the first longitudinal end. A space 1709 is defined between the base 1703 and the filter element 1710 and may serve as a redirection zone to allow the filtered fluid (e.g., fuel or air fuel mixture) to experience a change in direction after flowing through the filter element 1710.

A longitudinal axis $A_L$ of the filter assembly 1710 is oriented substantially perpendicular to a gravity vector, for example, at an angle between 80 to 100 degrees. In other embodiments, the filter assembly 1700 may be oriented substantially parallel to the gravity vector (e.g., at an angle in a range of -10 degrees to 10 degrees). The filter element 1710 includes a filter media pack 1712 that may include a coiled or rolled filter media layer, or a generally cylindrical filter media pack configured for axial flow. End caps (not shown) may be coupled to longitudinal ends of the filter media pack 1712. The filter media pack 1712 defines a central channel in which a center tube 1718 or effluent tube is disposed.

A sealing member 1730 is disposed at a first end of the filter media pack 1712 proximate to the cap 1704 between a radially outer surface of the filter media pack 1712 and a radially inner surface of the side wall 1704. The sealing member 1730 forms a radial seal between the filter media pack 1712 and the sidewall 1702 to prevent unfiltered fluid from flowing around the filter media pack 1712.

In operation, unfiltered fluid flows axially through the filter media pack 1712 from the first longitudinal end to the second longitudinal end, and is filtered. Filtered fluid is redirected in the redirection zone 1709 into the center tube 1718. The filter assembly 1700 is configured to coalesce water droplets that may be entrained in or emulsified with the fuel. For example, as shown in FIG. 45, a coalescing media layer 1717 is disposed proximate to the second longitudinal end such that the coalescing media layer 1717 contacts the second longitudinal end of the filter element 1710. Furthermore, a radial outer edge of the coalescing media layer 1717 is spaced apart from an inner surface of the sidewall 1704 (e.g., have a smaller diameter than a diameter of the sidewall 1704) so as to allow a portion of the filtered fluid to flow around the coalescing media layer 1711.

In some embodiments, the coalescing media layer 1717 includes a first mesh with 20 micron to 30 micron first openings, inclusive, that is supported by a second mesh formed of a stiffer material and having openings in a range of 400 micron to 600 microns, inclusive. In some embodiments, the first mesh and/or the second mesh may be formed from a stiff material (e.g., plastics or metals) and may have a porosity in a range of 500-1500 microns, inclusive. In other embodiment, the coalescing media layer 1717 may include a single piece of thicker media, e.g., a spun-bound media layer. The coalescing media layer 1717 is configured such that fluid (e.g., fuel) passes through it freely, but water droplet flow is impeded leading to coalescing of the water droplets of on the coalescing media layer 1717. The stiffer second mesh may ensure that the coalescing media layer 1717 remains in contact with the second longitudinal end (i.e., the effluent end) of the filter element 1710 during operation.

The coalescing media layer serves to coalesce water droplets that coalesce into larger droplets less likely to flow back through the center tube 1718. Having a multilayered coalescing media layer 1717 may further facilitate coalescence. The coalesced water droplets then drop along the gravity vector and may be collected in housing (e.g., in the redirection zone 1709 or on a portion of the sidewall located at a lower elevation with respect to gravity and can be later removed. In some embodiments, the center tube 1718 extends a small distance, for example, in a range of 2 mm to 15 mm, inclusive past the surface of the coalescing media layer 1717, so that a higher velocity region near an entrance of the center tube 1718 is spaced away from the coalesced water droplets, further reducing entrainment. In some embodiments, a first end of the center tube 1718 proximate to the base 1703 may be flared, for example, shaped as a horn or trumpet, to impede water droplet entry into the center tube 1718, and promoting water drainage perpendicular to fluid flow.

The center tube 1718 extends through the coalescing media layer 1717 and may have an interference fit with a corresponding opening defined in the coalescing media layer 1717. This causes the water droplets to preferably flow through the coalescing media layer 1717 or around it. However, the water droplets do not through an interface between the center tube 1718 and the coalescing media layer 1717 where the center tube 1718 penetrates through it. For example, an inner diameter of an aperture in the coalescing media layer 1717 through which the center tube 1718 passes, corresponds to an outer diameter of the center tube 1718 such that the center tube 1718 forms a radial seal with the aperture. In some embodiments, a circumferential retention flange 1716 may be provided around center tube 1718 proximate to the second longitudinal end of the filter element 1710 and configured to secure the coalescing media layer 1717 in position and improve an axial seal therewith.

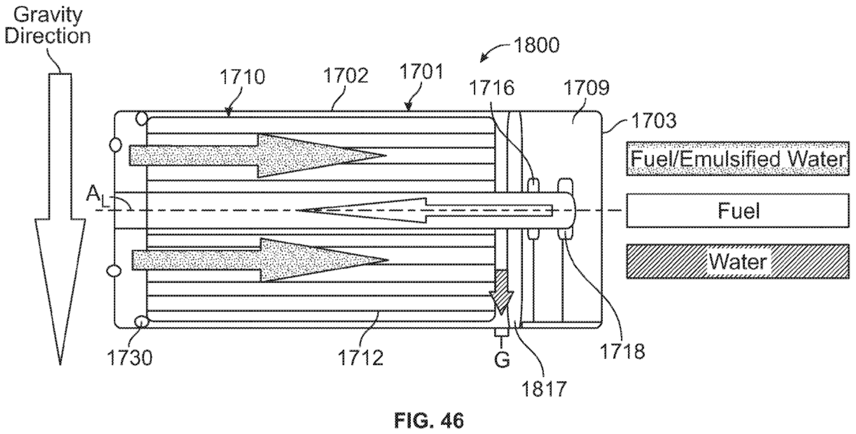

FIG. 46 is a side cross-sectional view of a filter assembly 1800, according to another embodiment. The filter assembly 1800 is similar to the filter assembly 1700 and includes similar components, apart from the following differences. A coalescing media layer 1817 is spaced apart from the second longitudinal end of the filter element 1710 such that a gap G is present between the coalescing media layer 1817 and second longitudinal end of the filter element 1710. Furthermore, the coalescing media layer 1817 has a radial cross-section (e.g., outer diameter) that corresponds to an inner radial cross-section (e.g., diameter) of the sidewall 1702 such that the radial outer edge of the coalescing media layer 1817 contacts the inner surface of the sidewall 1702. In some embodiments, the radial outer edge of the coalescing media layer 1817 may be coupled (e.g., via an adhesive) to the inner surface of the sidewall 1702. This ensures that all the fluid flow passes through the coalescing media layer 1817.

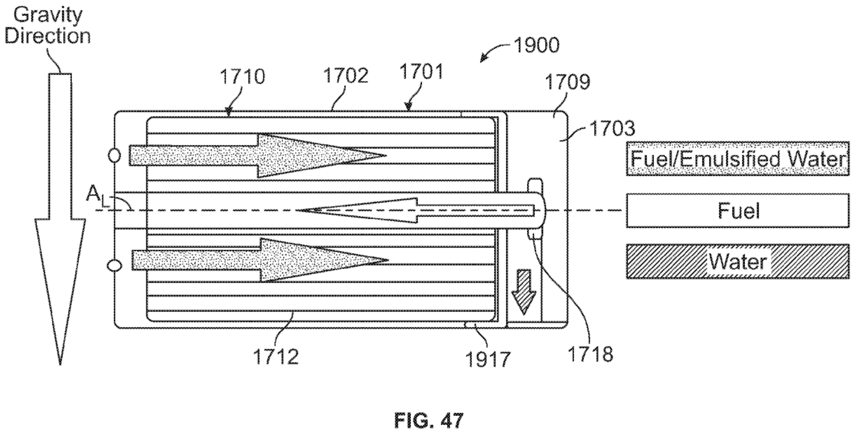

FIG. 47 is a side cross-sectional view of a filter assembly 1900, according to still another embodiment. The filter assembly 1900 is substantially similar to the filter assembly 1700 apart from the following differences. A coalescing media layer 1917 is used that has a substantially larger radial cross-section (e.g., diameter) relative to a radial inner cross-section (e.g., diameter) of the sidewall 1702. This causes portions of the coalescing media layer 1917 to be pinched between an outer surface of the filter element 1710, and the inner surface of the sidewall 1704, thereby providing a snug fit with the filter housing 1701.

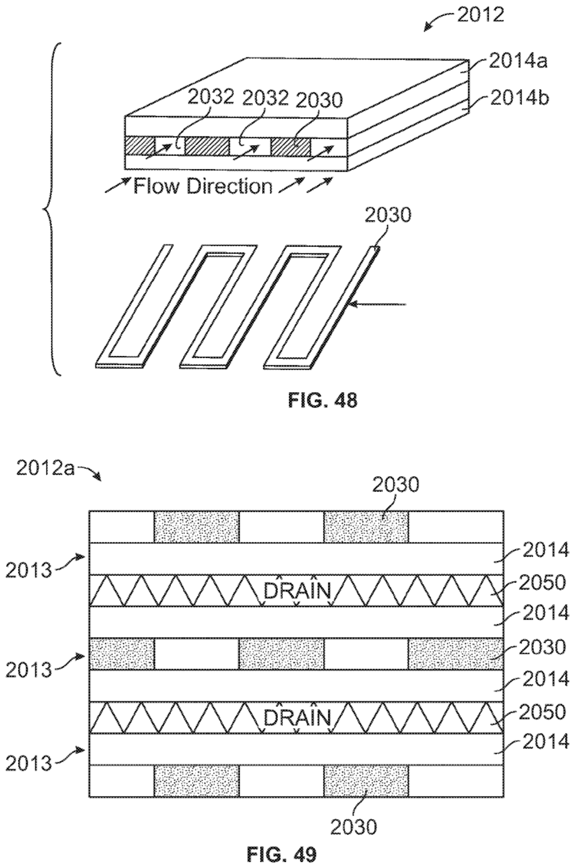

In some embodiments, a filter media pack includes a plurality of filter media layers with a substrate interposed therebetween. For example, FIG. 48 shows a front perspective view of a filter media pack or brick 2012, according to an embodiment. The filter media pack 2012 includes a first filter media layer 2014a and a second filter media layer 2014b, with a substrate 2030 interposed therebetween. Each of the first filter media layer 2014a and the second filter media layer 2014b may include non-pleated filter media that may be laminated to the substrate or frame 2030, for example, via an adhesive, heat bonding, sonic welding, or any other suitable bonding method. While only the first filter media layer 2014a and the second filter media layer 2014b are shown, any number of filter media layers may be stacked until a desired thickness of flow area filter media pack is obtained. In some embodiments, each filter media layer 2014a/b may have a thickness in a range of 1 to 3 microns, inclusive.

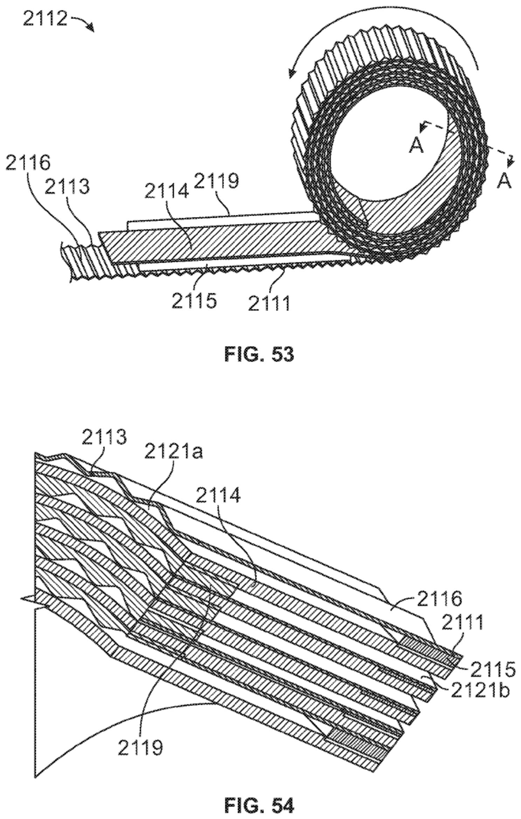

The substrate 2030 is configured to provide a plurality of alternating flow channels between the first filter media layer 2014a and the second filter media layer 2014b having one end open and the opposite end blocked. For example, the substrate 2030 may have a serpentine shape as shown in FIG. 48. Fluid flows into the filter media pack 2012 between the filter media layers 2014a/b into the open end of the flow channels as shown in FIG. 54. As the opposing end of the flow channel is blocked, the fluid is forced to flow through the filter media layers 2014a/b into adjacent flow channels that define outlets for the fluid to flow out of the filter media pack 2012.

FIG. 49 shows another embodiment of a filter media pack 2012a. The filter media includes a plurality of sets 2013 of filter media layers 2014 that include a substrate 2030 disposed therebetween. A substrate 2030 may also be disposed over the outer most filter media layers 2014. A drain layer 2050 is disposed between each set of filter media layers 2014 and may be configured to separate water droplets from the fluid flowing through the filter media layers 2014. Furthermore, the fluid has to flow through a drain and two filter media layers 2014 as it flows from an inlet channel to an outlet channel defined by the substrates 2030.

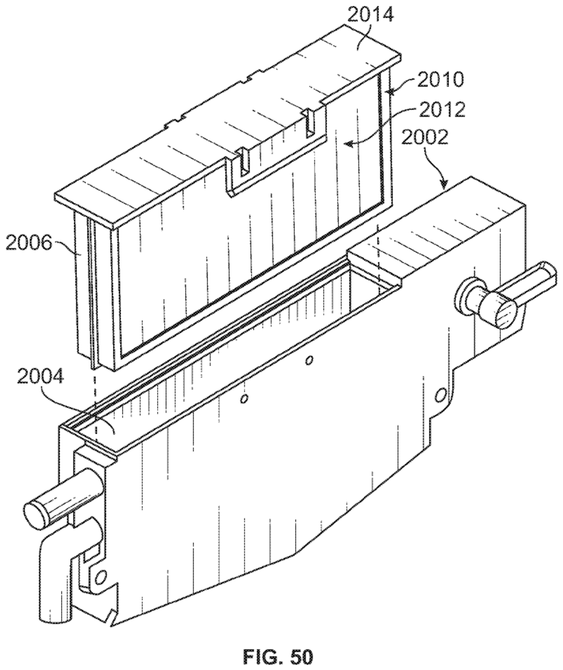

The filter media packs 2012 and 2012a allow the use of relatively thin or less rigid filter media that may be sensitive to pleating, for example, filter media including nanometer dimension fibers. In some embodiments, the filter media pack 2012/2012a may be placed or clamped in a rigid external frame. For example, FIG. 50 shows the filter media pack 2012 encased in a rigid frame 2006 (e.g., a plastic or metal frame) so as to form a filter element 2010, that can be inserted into an internal volume 2004 of a filter housing 2002 configured to receive the filter element 2010. The filter element 2010 and the filter housing 2002 form a filter cartridge that can be installed in a corresponding mounting structure. The filter media packs 2012/2012a may be disposed in series to achieve "filter-in-filter" filtration. Furthermore, the compact shape of the filter element 2010 allows utilization of mounting space (e.g., on an engine) more efficiently than a traditional cylindrical filter package.

Moreover, the rigid frame 2006 can also form a cover 2014 of the filter housing 2002 that seals an insertion end of the internal volume 2004 when the filter element 2010 is inserted therein. In this manner, the frame 2006 forms a portion of the filter housing 2002. Furthermore, a "no-filter, no-run" condition may be provided such that the filter cartridge is not operational until the filter element 2010 is securely inserted into the internal volume 2004, and the internal volume 2004 is sealed by the cover 2014.

In some embodiments, a filter media may include a flat sheet media. Pleating and/or embedding may produce external noises that can reduce performance of filter assemblies including such a filter media. For example, when a filter media layer is pleated, fibers of the filter media may stretch leading to breakage of at least some of the fibers which makes the bent part of pleated filter media the weakest location thereof. Also embedding may expose the fibers to some heat exchange and deteriorate the fiber properties.

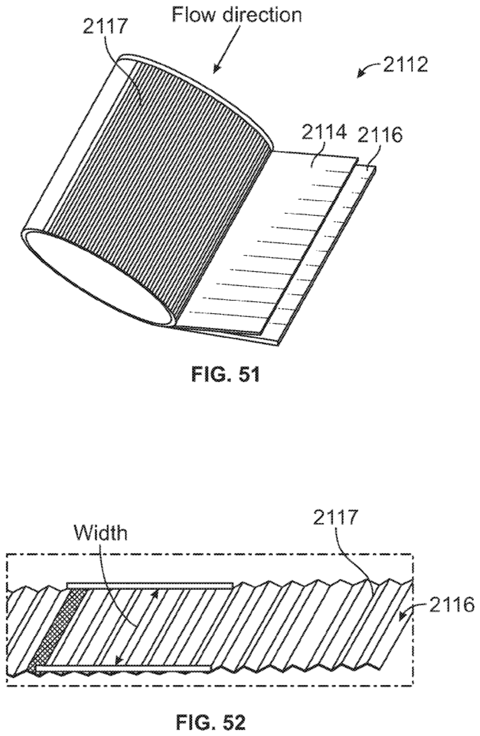

In contrast, FIG. 51 is a perspective view of a rolled filter media pack 2112 including a backing sheet 2116 and a filter media layer 2114, according to an embodiment. The filter media pack 2112 may be oriented vertically and is configured for axial flow. The filter media layer 2114 is flat and is rolled with the backing sheet 2116. The backing sheet 2116 is formed from a strong and impermeable material such as, for example, Kolon, corrugated aluminum, rubber with molded channels, or any other suitable material. The backing sheet 2116 may have a plurality of grooves 2117 defined thereon (e.g., is corrugated). The backing sheet 2116 is made from a stronger material than the filter media layer 2114 and provides support to the filter media layer 2114 in high pressure applications (e.g., liquid filtration applications where differential pressure may go as high as 4 bars). Since the filter media layer 2114 is flat, the plurality of grooves 2117 form flow channels on either side of filter media layer 2114.

Expanding further, FIG. 52 is a perspective view of the backing sheet 2116 in a flat configuration showing the plurality of grooves 2117 defined therein. For example, the backing sheet 2116 may include a corrugated sheet with the corrugations providing the plurality of grooves 2117. FIG. 53 is a side perspective view of the filter media pack 2112 with the backing sheet 2116 and the filter media layer 2114 partially unrolled, and FIG. 54 is a side cross-section view of the filter media pack of FIG. 53 taken along the line A-A in FIG. 53.

A first adhesive layer 2115 is disposed on the backing sheet 2116 proximate to a first axial edge of 2111 of the backing sheet 2116, and bonded to a corresponding first axial edge of the filter media layer 2114 such that first flow channels 2121a (e.g., inlet channels) are formed between the backing sheet 2116 and a first side of the filter media layer 2114. Furthermore, a second adhesive layer 2119 is disposed on a second axial edge of the filter media layer 2114 proximate to a second axial edge 2113 of the backing sheet 2116 and bonded to the backing sheet 2116 thereat when the filter media layer 2114 and the back sheet 2116 are rolled. In this manner, second flow channels 2121b (e.g., outlet channels) are formed between the backing sheet 2116 and a second side of the filter media layer 2114 opposite the first side. The first adhesive layer 2115 blocks an end of the first flow channels 2121a opposite an inlet thereof, causing the fluid (e.g., fuel, lubricant, air, etc.) to flow through the filter media layer 2114 into the second flow channels 2121b and thenceforth exit the filter media pack 2112.

As used herein, the terms "about" and "approximately" generally mean plus or minus 10% of the stated value. For example, about 0.5 would include 0.45 and 0.55, about 10 would include 9 to 11, about 1000 would include 900 to 1100.

It should be noted that the term "example" as used herein to describe various embodiments is intended to indicate that such embodiments are possible examples, representations, and/or illustrations of possible embodiments (and such term is not intended to connote that such embodiments are necessarily extraordinary or superlative examples).

As utilized herein, the term "substantially" and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed (e.g., within plus or minus five percent of a given angle or other value) are considered to be within the scope of the invention as recited in the appended claims. The term "approximately" when used with respect to values means plus or minus five percent of the associated value.

The terms "coupled," "connected," and the like as used herein mean the joining of two members directly or indirectly to one another. Such joining may be stationary (e.g., permanent) or moveable (e.g., removable or releasable). Such joining may be achieved with the two members or the two members and any additional intermediate members being integrally formed as a single unitary body with one another or with the two members or the two members and any additional intermediate members being attached to one another.

It is important to note that the construction and arrangement of the various exemplary embodiments are illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter described herein. Other substitutions, modifications, changes and omissions may also be made in the design, operating conditions and arrangement of the various exemplary embodiments without departing from the scope of the embodiments described herein.

While this specification contains many specific implementation details, these should not be construed as limitations on the scope of any embodiment or of what may be claimed, but rather as descriptions of features specific to particular implementations of particular embodiments. Certain features described in this specification in the context of separate implementations can also be implemented in combination in a single implementation. Conversely, various features described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

**Clauses:**

1. A filter assembly, comprising:

a filter housing defining an internal volume having an inner cross-section defining an inner cross-sectional distance, the filter housing having a base and a sidewall;
a filter element disposed within the internal volume, the filter element comprising:

a filter media pack, at least a portion of the first filter media pack having an outer cross-section defining an outer cross-sectional distance that is substantially equal to the inner cross-sectional distance of the internal volume of the filter housing; and
a support structure coupled to at least one longitudinal end of the filter media pack.

2. The filter assembly of clause 1, wherein the support structure is coupled to a longitudinal end of the filter media pack at which a fluid exits the filter media pack after passing therethrough.

3. The filter assembly of clause 1, wherein the support structure includes:

a first support structure coupled to a first longitudinal end of the filter media pack distal from the base; and
a second support structure coupled to a second longitudinal end of the filter media pack opposite the first longitudinal end.

4. The filter assembly of clause 1, wherein the filter media pack comprises a tetrahedral media.

5. The filter assembly of clause 4, wherein an outer cross-section of the filter media pack is circular.

6. The filter assembly of clause 1, wherein the filter media pack comprises an axial flow filter media pack structured to allow a fluid to flow therethrough along a longitudinal axis of the filter assembly.

7. The filter assembly of clause 3, wherein each of the first support structure and the second support structure comprise a grid or mesh.

8. The filter assembly of clause 2, wherein a sealing member is disposed between the filter element proximate to a longitudinal end of the filter media pack opposite the longitudinal end at which the support structure is disposed, and the sidewall of the filter housing so as to prevent fluid from flowing around the filter media pack.

9. The filter assembly of clause 3, wherein the filter housing further comprises an outlet chamber formed between the second support structure and the base, and wherein an outlet is provided in the outlet chamber to allow filtered fluid to exit the filter housing.

10. The filter assembly of clause 9, further comprising a cap coupled to an end of the filter housing distal from the base, an inlet defined in the cap so as to allow fluid to enter the filter housing.

11. The filter assembly of clause 1, wherein the filter media pack is formed from a filter media comprising:

a filter media layer folded along a folding axis thereof such that a first edge of the filter media layer is proximate to an opposite edge of the filter media layer after being folded and a filter pocket is formed by the filter media layer, the filter pocket configured to receive unfiltered fluid; and
an influent flow mesh disposed in the filter pocket.

12. The filter assembly of clause 11, wherein the filter media layer is bonded to at least itself or the influent flow mesh along the folding axis.

13. The filter assembly of clause 11, wherein the filter media further comprises an effluent flow mesh disposed on a surface of the filter media layer outside the filter pocket.

14. The filter assembly of clause 13, wherein the filter media pack comprises a cylindrical roll of the filter media layer rolled along its folding axis.

15. The filter assembly of clause 13, wherein the filter media pack comprises a plurality of filter media layers providing plurality of filter pockets, each of the plurality of filter pocket having an effluent flow mesh disposed therebetween.

16. The filter assembly of clause 1, further comprising an upstream filter media disposed upstream of the filter element.

17. A filter assembly, comprising:

a filter housing defining an internal volume having an inner cross-section defining an inner cross-sectional distance, the filter housing having a base and a sidewall;
a filter element disposed within the internal volume, the filter element comprising:

an axial flow filter media pack, a channel defined through the axial flow filter media pack along a longitudinal axis of the filter assembly, the axial flow filter media pack configured to allow a fluid to flow therethrough along the longitudinal axis in a first direction and be filtered, the filtered fluid flowing through the channel in a second direction opposite the first direction towards the outlet, at least a portion of the axial flow filter media pack having an outer cross-section defining an outer cross-sectional distance that is substantially equal to the inner cross-sectional distance of the internal volume of the housing; and
a support structure coupled to at least one end of the axial flow filter media pack.

18. The filter assembly of clause 17, wherein the support structure is coupled to an end of the axial flow filter media pack at which a fluid exits the axial filter media pack after passing therethrough.

19. The filter assembly of clause 17, wherein the support structure comprises:

a first support structure coupled to a first end of the axial flow filter media pack; and
a second support structure coupled to a second end of the axial flow filter media pack opposite the first end.

20. The filter assembly of clause 17, wherein the outer cross-sectional distance of the axial flow filter media pack comprises a sum of (a) a cross-sectional width of the channel; (b) a first radial distance from an inner surface of the axial flow filter media pack forming the channel at a first location to an outer surface of the axial flow filter media pack proximate to the first location; and (c) a second radial distance from the inner surface of the axial flow filter media pack at a second location opposite the first location, to the outer surface of the axial flow filter media pack proximate to the second location.

21. The filter assembly of clause 17, wherein the axial flow filter media pack comprises a tetrahedral media.

22. The filter assembly of clause 21, wherein the outer cross-section of the axial flow filter media pack is circular.

23. The filter assembly of clause 17, wherein the filter element further comprises a center tube positioned within the channel, an end of the center tube coupled to the outlet.

24. The filter assembly of clause 19, further comprising a cap coupled to an end of the filter housing opposite the base such that an inlet chamber is defined between the first support structure and the cap, the base located at a lower elevation relative to the cap, the cap defining the outlet of the filter housing and an inlet for allowing the fluid to enter the inlet chamber, the outlet fluidly sealed from the inlet chamber,
wherein a flow reversal chamber is defined between the second support structure and the base, the filtered fluid changing a flow direction thereof from the first direction towards the second direction in the flow reversal chamber.

25. The filter assembly of clause 24, further comprising a drain provided in the flow reversal chamber for draining liquid collected in the flow reversal chamber.

26. The filter assembly of clause 24, wherein the first support structure and the second support structure comprise a grid or mesh.

27. The filter assembly of clause 18, wherein a sealing member is disposed between the first support structure and the sidewall of the filter housing so as to prevent fluid from flowing around the axial flow filter media pack.

28. The filter assembly of clause 19, further comprising a cap is coupled to an end of the filter housing opposite the base such that an inlet chamber is defined between the second support structure and the cap, the cap located at a lower elevation relative to the base, the cap defining an inlet for allowing the fluid to enter the inlet chamber, and the outlet, the outlet fluidly sealed from the inlet chamber,
wherein a flow reversal chamber is defined between the first support structure and the base, the filtered fluid changing a flow direction thereof from the first direction towards the second direction in the flow reversal chamber.

29. The filter assembly of clause 28, further comprising a drain provided in the inlet chamber for draining liquid collected in the inlet chamber.

30. The filter assembly of clause 28, wherein the first support structure and the second support structure comprise a grid or mesh.

31. The filter assembly of clause 28, wherein a sealing member is disposed between the second support structure and the sidewall of the filter housing so as to prevent fluid from flowing around the filter media.

32. The filter assembly of clause 17, wherein the axial flow filter media pack is formed from a filter media comprising:

> a filter media layer folded along a folding axis thereof such that a first edge of the filter media layer is proximate to an opposite edge of the filter media layer after being folded and a filter pocket is formed by the filter media layer, the filter pocket configured to receive unfiltered fluid; and an influent flow mesh disposed in the filter pocket.

33. The filter assembly of clause 32, wherein the filter media layer is bonded to at least itself or the influent flow mesh along the folding axis.

34. The filter assembly of clause 32, wherein the axial flow filter media pack further comprises an effluent flow mesh disposed on a surface of the filter media layer outside the filter pocket.

35. The filter assembly of clause 34, wherein the axial flow filter media pack comprises a cylindrical roll of the filter media layer rolled along its folding axis.

36. A filter element configured to be disposed within a filter housing having an inner cross-section that defines a maximum inner cross-sectional distance, the filter element comprising:

> a filter media pack, at least a portion of the first filter media pack having an outer cross-section defining a maximum outer cross-sectional distance that is substantially equal to the maximum inner cross-sectional distance of the filter housing; and
> a support structure coupled to at least one longitudinal end of the filter media pack distal.

37. A filter element configured to be disposed within a filter housing having an inner cross-section defining an inner cross-sectional distance, the filter element comprising:

> an axial flow filter media pack, a channel defined through the axial flow filter media pack along a longitudinal axis of the filter element, the axial flow filter media pack configured to allow a fluid to flow therethrough along the longitudinal axis in a first direction and be filtered, the filtered fluid flowing through the channel in a second direction opposite the first direction towards the outlet, at least a portion of the axial flow filter media pack having an outer cross-section defining an outer cross-sectional distance that is substantially equal to the inner cross-sectional distance of the housing; and

> a support structure coupled to at least one end of the axial flow filter media pack.

**Claims**

1. A filter assembly, comprising:

> a filter housing defining an internal volume; and
> a filter element disposed within the internal volume, the filter element comprising an axial flow filter media pack configured to allow a fluid to flow therethrough along a longitudinal axis in a first direction between a first longitudinal end and a second longitudinal end of the axial flow filter media pack, the axial flow filter media pack including a backing sheet and a filter media layer that is rolled with the backing sheet to form a rolled filter media pack, the backing sheet having a plurality of grooves defined thereon, the backing sheet and the filter media layer together defining:

>> a plurality of first flow channels open at the first longitudinal end and sealed at the second longitudinal end, and
>> a plurality of second flow channels open at the second longitudinal end and sealed at the first longitudinal end, the filter media layer being disposed between the plurality of first flow channels and the plurality of second flow channels, such that fluid entering axially into the plurality of first flow channels is filtered through the filter media layer and exits from the plurality of second flow channels axially through the second longitudinal end, the filter element and the filter housing together defining a flow reversal chamber that is configured to change a flow direction of the fluid from the first direction towards a second direction opposite the first direction when the fluid is flowing through the filter assembly.

2. The filter assembly of claim 1, wherein the axial flow filter media pack defines a central channel that extends along the longitudinal axis of the filter element, and wherein the axial flow filter media pack is further configured to allow the fluid to flow through the central channel in the second direction.

3. The filter assembly of claim 2, wherein the filter element further comprises a center tube positioned within the central channel, the center tube coupled to (i) the flow reversal chamber and (ii) one of an inlet and an outlet of the filter assembly.

4. The filter assembly of any one of claims 1-3, wherein the rolled filter media pack comprises a cylindrical roll of the filter media layer and the backing sheet that are rolled together.

5. The filter assembly of claim 4, wherein the backing sheet is made from a stronger material than the filter media layer.

6. The filter assembly of any one of claims 1-3, wherein the filter housing comprises a base and a sidewall extending perpendicular to the base from an outer edge of the base, the filter assembly further comprising a cap coupled to an end of the filter housing distal from the base, the cap defining both an inlet and an outlet of the filter assembly.

7. The filter assembly of any one of claims 1-3, wherein the filter housing comprises a base and a sidewall extending perpendicular to the base from an outer edge of the base, wherein the flow reversal chamber is at least partially defined by the base.

8. The filter assembly of any one of claims 1-3, wherein the internal volume of the filter housing has an inner cross-section defining an inner cross-sectional distance, at least a portion of the axial flow filter media pack has an outer cross-section defining an outer cross-sectional distance that is substantially equal to the inner cross-sectional distance.

9. The filter assembly of any one of claims 1-3, further comprising a sealing member disposed between the axial flow filter media pack and a sidewall of the filter housing so as to prevent the fluid from flowing around an outer diameter of the axial flow filter media pack.

10. A filter element configured to be disposed within a filter housing, the filter element comprising an axial flow filter media pack configured to allow a fluid to flow therethrough along a longitudinal axis in a first direction between a first longitudinal end and a second longitudinal end of the axial flow filter media pack, the axial flow filter media pack including a backing sheet and a filter media layer that is rolled with the backing sheet to form a rolled filter media pack, the backing sheet having a plurality of grooves defined thereon, the backing sheet and the filter media layer together defining:

a plurality of first flow channels open at the first longitudinal end and sealed at the second longitudinal end, and
a plurality of second flow channels open at the second longitudinal end and sealed at the first longitudinal end, the filter media layer being disposed between the plurality of first flow channels and the plurality of second flow channels, such that fluid entering axially into the plurality of first flow channels is filtered through the filter media layer and exits from the plurality of second flow channels axially through the second longitudinal end, the axial flow filter media pack configured to be arranged within the filter housing so that, when in operation, the fluid flows in the first direction around the axial flow filter media pack and in a second direction opposite the first direction through the axial flow filter media pack, the axial flow filter media pack defining a central channel that extends along the longitudinal axis of the filter element.

11. The filter element of claim 10, wherein the filter media layer includes a fully synthetic nanofiber media that is paired with influent and effluent mesh layers.

12. The filter element of claim 10, wherein the filter element further comprises a center tube positioned within the central channel.

13. The filter element of any one of claims 10-12, wherein the rolled filter media pack comprises a cylindrical roll of the filter media layer and the backing sheet that are rolled together.

14. The filter element of any one of claims 10-12, further comprising a support structure coupled to a longitudinal end of the axial flow filter media pack, the support structure configured to form a fluid tight seal against a housing.

FIG. 1

**FIG. 2**

**FIG. 3**

FIG. 4

FIG. 5

FIG. 6

FIG. 7

FIG. 8

FIG. 9

FIG. 10

**FIG. 11**

**FIG. 12**

**FIG. 13**

**FIG. 14**

**FIG. 15**

**FIG. 16**

**FIG. 17A**

FIG. 17B

FIG. 17C

FIG. 18

FIG. 19

FIG. 20

FIG. 21

**FIG. 22**

**FIG. 23**

613    642

Operation 1

615

**FIG. 24**

613
642

Operation 2

615

623

**FIG. 25**

648    613    642

615    Operation 3

623

**FIG. 26**

652    613    642

654    615    Operation 3

623

**FIG. 27**

FIG. 28

FIG. 29

FIG. 30

FIG. 31

FIG. 32

FIG. 33

FIG. 34

FIG. 35

FIG. 36

**FIG. 37**

**FIG. 38**

**FIG. 39**

Oil Flow In
**FIG. 40**

FIG. 41

1612
1634
1617
1613
1634 Y Y 1615

**FIG. 42**

1612
1613

**FIG. 43**

FIG. 44

EP 4 736 982 A2

**FIG. 45**

**FIG. 46**

**FIG. 47**

**FIG. 48**

**FIG. 49**

**FIG. 50**

FIG. 51

FIG. 52

**FIG. 53**

**FIG. 54**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8397920 B